# EUROPEAN PATENT APPLICATION

(11) **EP 4 765 730 A1**
(43) Date of publication of application: **24.06.2026**
(21) Application number: 24222751.0
(22) Date of filing: 23.12.2024
(51) Int. Cl.: H04L 9/40

(54) **METHOD FOR STATE MANAGEMENT OF AN AUTHENTICATION PATHWAY**

(71) Applicant: Barclays Execution Services Limited, London E14 5HP (GB)
(72) Inventor: NOTON, Laurence, London, E14 5HP (GB)
(74) Representative: Carpmaels & Ransford LLP

(57) **Abstract**

A computer-implemented method for state management of a series of processing blocks executing according to an authentication pathway. An execution progress indicator stores data for the execution of the series of processing blocks. The execution progress indicator comprises an active state field, the active state field being configured to identify one of a plurality of stored state definitions, where each state definition defines an entry condition and an exit condition. The method comprising: receiving payload data from execution of the series of processing blocks, retrieving a first state definition from the plurality of state definitions based upon the active state field of the execution progress indicator, determining that the exit condition of the first state definition is met according to the payload data, identifying a second state definition from the plurality of state definitions by determining which of the plurality of state definitions comprises entry conditions that are met, replacing the first state definition identified in the active state field with the second state definition, and triggering further execution of the series of processing blocks in accordance with the second state definition.

## Description

### Technical Field

The present invention relates to methods, computer program products, computer readable media comprising instructions and systems for obtaining authentication outcomes for resources. Specifically, the present invention relates to computer-implemented methods for obtaining authentication outcomes for different resources which require different authentication pathways.

### Background

In contemporary digital environments, data has become ubiquitous, with a notable surge in the prevalence of protected data. Defined by its sensitive cognitive content and requirement for rigorous security measures, the prominence of protected data is steadily increasing. Consequently, there has been a corresponding escalation in the demand for systems specialised in processing protected data.

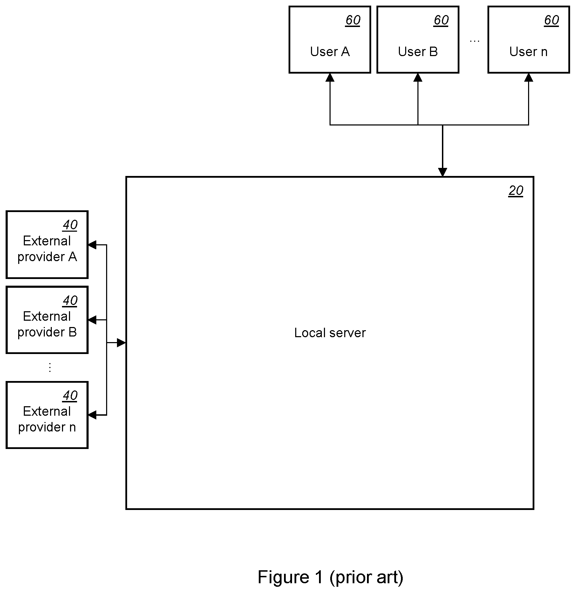

Traditionally, the processing of protected data has been centralised around local servers, as depicted in Figure 1. A local server serves as the focal point responsible for executing protected data processing tasks. These local servers are typically situated on-premises or within a private network environment, physically hosting a myriad of applications specialised in processing various aspects of protected data. In practical scenarios, these applications cater to diverse purposes, often corresponding to distinct products or services. For instance, in the context of consumer banking, one application may handle debit card transactions, while another may focus on credit card transactions.

Despite their historical prevalence, local servers are increasingly facing challenges for protected data processing. Such challenges include scalability constraints, overhead associated with maintenance, geographic limitations, data protection compliance, security vulnerabilities, computer resource redundancy, and latency issues. In light of these challenges and the ever-increasing complexity of the data processing landscape, a need has emerged for systems for processing protected data that transcend the limitations of local servers.

The ability to restrict access to resources is a key capability in the processing of protected data, typically requiring an authentication outcome to be obtained by an entity attempting to access the resource. In some scenarios, the resource may be a digital asset such as the protected data itself. Social media platforms, financial institutions, research institutions and other entities are all interested in maintaining the privacy of internal, user and research data. In each case, the importance of the protected data may be tied to its restricted accessibility. Alternatively, these entities may be legally required to withhold the protected data, such as specific user-identifying data under General Data Protection Regulation (GDPR). In other scenarios, the resource may be a physical asset, accessible through use of the protected data. In yet further scenarios, the resource may be a service accessible through use of the protected data.

In order to obtain an authentication outcome, an authentication pathway (i.e. a series of checks and processes) is typically followed. Authentication pathways are not always straightforward due to the need to tailor the authentication pathway for the user requesting the authentication and for the particular resource. For instance, the specific factors of each authentication request may necessitate the use of different authentication checks to be conducted for each resource, each requesting user, or even each specific authentication attempt. As a consequence, the system may need to handle a multitude of possible different authentication pathways. Implementing computer facilitated authentication for each different authentication pathway is inefficient in terms of computational resources. This is because, although each authentication pathway may be unique, often there is a lot of overlap between different authentication pathways, leading to duplication in computer memory or processing, particularly in the duplication of back-end processes such as state management. This is especially true when there are different resources that need to be authenticated for, as the number of possible authentication pathways scales with the number of different resources. This is further compounded by the security and efficiency of authentication being dependent, in part, upon the specificity of an authentication pathway to the specific factors of each authentication, thereby requiring an increased number of unique authentication pathways. Moreover, significant input is required to develop and maintain these individualised authentication pathways and the backend systems implementing them, which hampers the security of these processes, as well as their scalability and adaptability.

Several attempts have been made to reduce the number of individual authentication systems required to provide an authentication pathway specific to the factors of an authentication request. For example, in US 7941669 B2, a user is allowed to ascribe a preference to the authentication method they would like to use, similarly, in CN 112989301 A, the user is able to select whether a password, USB key, or both a password and USB key, should be required for authentication. However, these attempts fail to tailor authentication beyond a single simplistic choice such as a user preference or a binary choice for single factor or multi factor authentication respectively. Moreover, they do not address the problem of duplication in authentication, in state management or otherwise, making them unable to scale to introduce even new ways of authenticating without sacrificing security and/or efficiency of the authentication.

Therefore, there exists a significant need for improved generalisable authentication methods for resources and systems suitable for processing architectures which transcend local servers.

### Summary

The present invention is defined by the independent claims, with further optional features being defined by the dependent claims.

In a first aspect of the invention, there is provided a computer-implemented method for state management of a series of processing blocks executing according to an authentication pathway, wherein an execution progress indicator stores data for the execution of the series of processing blocks, the execution progress indicator comprising an active state field, the active state field configured to identify one of a plurality of stored state definitions, each state definition defining an entry condition and an exit condition, the method comprising receiving payload data from execution of the series of processing blocks; retrieving a first state definition from the plurality of state definitions based upon the active state field of the execution progress indicator; determining that the exit condition of the first state definition is met according to the payload data; identifying a second state definition from the plurality of state definitions by determining which of the plurality of state definitions comprises entry conditions that are met; replacing the first state definition identified in the active state field with the second state definition; and triggering further execution of the series of processing blocks in accordance with the second state definition. In this way the method provides a state machine able to record and maintain the state of any arrangement of processing blocks in a series of processing blocks taken from the plurality of processing blocks, thereby enabling authentication pathways to be defined by providing a series of processing blocks without requiring definition of a new state machine or manual set up of new state transitions. This method therefore increases both software efficiency, by reducing the number of state definitions that need to be stored and the number of different state machines that need to be executed, and implementation efficiency, through reducing the software overhead that needs to be maintained and removing the need to program any backend process when ordering processing blocks for a new authentication pathway. Furthermore, by providing a plurality of state definitions which self-identify entry and exit conditions, a single set of state definitions can be applied for every authentication pathway. Using a single set of state definitions means the state definitions are more easily kept in compliance with security standards, do not require external dependencies for validating state transitions and are more easily monitored for vulnerabilities. As such, system security is improved through use of the method by mitigating state machine susceptibilities that could lead to a positive authentication outcome being generated from a series of processing blocks where one should not be. Finally, by triggering process block execution in accordance with state, it can be ensured that requirements for a positive authentication are met before moving on to the next processing block and that interruptions in execution or processing failures can be recovered by using the present method. The former advantage improves the certainty with which the ultimate positive authentication outcome of the authentication pathway can be issued and the latter advantage ensures that processing of the series of processing blocks can be paused and restarted without requiring the authentication process to be restarted, thereby allowing for longer and more complex series of processing blocks and thus authentication pathways to be implemented (therefore also improving authentication security).

In some embodiments, the active state field can only identify one state definition at any one time. In this way, the method ensures that only the current state is stored in the active state field, thereby preventing erroneous repetition of process block execution in the series of processing blocks, particularly after an interrupt, while also minimising the amount of data which needs to be maintained in the active state field, thus improving storage efficiency.

In some embodiments, each state definition comprises a unique state definition identifier and the active state field stores one state definition identifier. In this way, the current state definition can be identified in the active state field without the storage of additional data that forms part of the state definition of the current state. As such, storage and computational efficiency can be improved as only the unique state definition identifier needs to be manipulated and stored, while other portions of a state definition, such as entry or exit conditions, can be read from the state definition corresponding to the unique state definition identifier in the plurality of state definitions. Moreover, minimising the data copied and manipulated, improves system reliability by reducing the chance that errors can occur and improves system security by reducing the number of data copying actions which may introduce vulnerabilities.

In some embodiments, each state definition comprises one or more of: data defining preceding states, data defining subsequent states, and/or the decisioning instructions required to determine which state definition to use next. In this way, certain states which, in order for the processing blocks to which they correspond to have the correct inputs (or otherwise), need to be succeeded or preceded by certain other states, can identify these other states which should precede or succeed them. This self-contained identification improves computational efficiency by minimising the number of state definitions in the plurality of state definitions whose entry conditions need to be assessed. Moreover, this identification also increases the amount of data in the plurality of state definitions which would need to be compromised in order to maliciously manipulate the execution of the series of processing blocks, thereby increasing system security.

In some embodiments, triggering further execution of the series of processing blocks in accordance with the second state definition comprises ceasing execution of the currently executing processing block. In this way, a second state definition becoming identified in the active state field can signal that execution of a processing block is complete or sufficiently complete for the authentication pathway to which the series of processing blocks relates. This prevents excess or unnecessary execution of processing blocks, thereby improving computational efficiency and, in some cases, improving the speed at which an authentication outcome is reached through the execution of the series of processing blocks. In further embodiments, the method comprises triggering execution of a subsequent processing block of the plurality of predefined processing blocks in accordance with the series of processing blocks and the second state definition. In this way, the method second state definition can be used as an indicator that it is appropriate to execute the subsequent processing block, thereby improving authentication security by limiting execution of the subsequent processing block to the time at which the second state definition entry conditions have been satisfied. This feature also improves system integrity (and reduces error rates) by ensuring the subsequent processing block executes at an appropriate time such that inputs for the subsequent processing block are available. In yet further embodiments, the second state definition identifies the subsequent processing block of the predefined plurality of processing blocks. In this way, system security can be improved if a state must correspond to a single, or limited number of, processing block of the plurality of processing blocks. By identifying the subsequent processing block in the second state definition, the series of processing blocks cannot be manipulated to divert from executing the subsequent processing block without also modifying the second state definition.

In some embodiments, the method further comprises outputting an authentication outcome based on the second state definition. In further embodiments, the authentication outcome may be positive or negative. In this way, the authentication outcome can be output in response to a specific active state definition rather than as a direct output of a single processing block. At a high level, this improves system security by ensuring that the plurality of state definitions (rather than a single processing block) would need to be modified in order for a positive authentication outcome to be output in a case where authentication should not be granted. Additionally, however, this feature allows an authentication outcome, whether positive or negative, to be output without programming processing blocks to check that a final state definition has been reached (as the state definition itself can be used as basis for outputting an authentication outcome). This improves system flexibility and computational efficiency, as processing blocks do not need to be bifurcated or complicated to account for the edge case of checking a state definition history before providing an authentication outcome.

In some embodiments, identifying the second state definition from the plurality of state definitions by determining which of the plurality of state definitions comprises entry conditions that are met comprises: identifying an allowable subset of state definitions from the plurality of state definitions based on a configuration file; and identifying the second state definition from the allowable subset of state definitions by determining which of the plurality of state definitions comprises entry conditions that are met. The identification of an allowable subset of states may allow entry conditions for each of the state definitions to be simplified such that adherence to the order of the series of processing blocks as defined in a configuration file is not dependent upon the entry conditions in each state definition. Moreover, identifying the allowable subset of states permits existing state definitions in the plurality of state definitions to be more easily used for executing newly defined series of processing blocks, thereby making the state definitions more modular and flexible while also reducing the frequency at which the plurality of state definitions is modified which improves system security.

In some embodiments, the method further comprises identifying the first state definition in a previous state field of the execution progress indicator. In this way, should the active state field become corrupted, it can be recovered based upon the previous state field and/or the execution of the series of processing blocks can be restarted based upon the previous state field to minimise repetition of execution of the series of processing blocks. Moreover, it can more easily be determined if entry conditions for states which require knowledge of the two preceding active state field identifiers if both of these identifiers are stored in the active state field and previous state field. In further embodiments, the previous state field only identifies one state definition. This feature prevents having to sort through multiple previous state identifiers in a recovery scenario by identifying only the state definition which immediately preceded the state definition identified in the active state field. Therefore, downtime caused by errors can be minimised and computational efficiency can be improved by this streamlining of variables available for recovery purposes.

In some embodiments, the method further comprises interrupting the execution of the series of processing blocks, and restarting the execution of the series of processing blocks in accordance with the second state definition. In this way, the state definitions can be leveraged to restart execution of the series of processing blocks after an interrupt. This can improve computational and memory efficiency by allowing the series of processing blocks to intentionally terminate when a response is required from a local server or external provider system following, for example, an asynchronous API call made to such a server/system. Moreover, being able to handle such interrupts allows for more complex series of processing blocks to be implemented (for example, series of processing blocks which request more input from a requesting user) as interrupts will not require execution of the series of processing blocks to be restarted. This can improve the security of authentication pathways implemented as series of processing blocks.

In some embodiments, the method further comprises storing the first state identifier in an audit log; the audit log being configured to record each state identifier replaced in the active state field. In this way, system security can be improved by providing a repository of previous state definitions in the active state field for a specific instance of executing a series of processing blocks. This allows malicious activity or errors in the implementation of an authentication pathway to be more easily identified and, resultantly, rectified.

In a second aspect of the invention, there is provided a computer program product comprising instructions which, when executed by a cloud-based system, cause the cloud-based system to perform the method of the first aspect of the invention.

In a third aspect of the invention, there is provided a computer readable medium comprising instructions which, when executed by a cloud-based system, cause the cloud-based system to perform the method of the first aspect of the invention.

In a fourth aspect of the invention, there is provided a cloud-based system, the cloud-based system comprising at least one processor, wherein the at least one processor is configured to perform the method of the first aspect of the invention.

### Brief Description of the Drawings

Embodiments of the invention are described below, by way of example, with reference to the following drawings, in which:
Figure 1 depicts a conventional system for processing protected data.
Figure 2 illustrates a cloud computing environment-based system for processing protected data in which the methods of the invention may be implemented.
Figure 3A and Figure 3B show components of a cloud computing environment for implementing the invention.
Figure 4A and Figure 4B show an example user device and example external provider system, respectively, that may be used in conjunction with the cloud computing environment-based system of the invention.
Figure 5 shows an example architecture of a cloud computing environment for implementing the invention.
Figure 6A, Figure 6B and Figure 6C show example integration patterns of a cloud computing environment for implementing the invention.
Figure 7A and Figure 7B show an example architecture of an apply domain according to the invention.
Figure 8 shows an example flow diagram for the generation and execution of a first series of processing blocks in response to a request for a resource.
Figure 9A, Figure 9B, Figure 9C and Figure 9D show various configurations of series of processing blocks which may be generated and executed by the method of Figure 8.
Figure 10 shows an example flow diagram for managing the state of a series of processing blocks executing according to an authentication pathway in accordance with the invention.
Figure 11 illustrates an example of how an execution progress indicator is modified in accordance with the invention.
Figure 12 depicts an example of an embodiment in which allowable subsets of a plurality of states are used in accordance with the invention.

### Detailed Description

The present disclosure pertains to systems for processing protected data and methods related to processing protected data. Protected data, as referred to herein, is data that requires protecting due to its cognitive content. This means that protected data typically requires additional security provisions to prevent unauthorised access. Moreover, the storage and processing of protected data is often restricted. In some instances, the restriction is caused by local legislation, for example General Data Protection Regulation (GDPR) in the European Union, and the Data Protection Act 2018 in the United Kingdom. Protected data may include personal data, i.e., information relating to an identified or identifiable natural person. For example, secure data may include a name, an identification number, location data, an online identifier or one or more factors specific to the physical, physiological, genetic, mental, economic, cultural or social identity of a natural person. Protected data may also include financial data as an alternative or in addition.

Figure 1 illustrates a conventional system for processing protected data. As shown in Figure 1, such systems are centralised around a local server 20 that is responsible for performing the processing. The local server 20 is communicatively coupled to a plurality of user devices 60 (i.e. User A, User B... User n), from which processing requests may be received and to which processing outputs may be sent. Typically, a processing request relates to protected data of the user of the user device 40 that sends the request. For example, a processing request may be a request for a resource. If the processing request is a request for a resource, the user originating the request is a requesting user. Generally, the requesting user is a natural entity, such as a person utilising a user device 60. In some embodiments, the requesting user may be a plurality of persons utilising a user device 60. In other embodiments, there may be no natural entity associated with the requesting user, such that the user device 60 originates the request automatically. In other instances, the user that sends the processing request from their user device 60 may be different to the user to which the protected data is related. The local server 20 is also communicatively coupled to a plurality of external provider systems 40 (i.e. External provider A, External provider B... External provider n), as some processes require input from an external provider to be performed. The communicative coupling is established via at least one communication network such as the Internet, a local area network (LAN), a wide area network (WAN), a cellular network (e.g. such as 3G, 4G LTE and 5G), and the like.

Local server 20 is a physical server or group of servers that are located on-premises or within a private network. Local server 20 stores a plurality of applications for processing protected data, each of the applications having a different purpose or underlying product to which it relates. For example, in a consumer banking context, one application may relate to debit card transactions while another application relates to credit card transactions.

The applications stored by local server 20 are typically batch-driven applications. This type of application is designed to process data in batches, where a set of data is collected, processed, and output before the next set of data is collected and processed. In this context, a 'batch' refers to a collection or grouping of data, tasks, or operations that are processed together as a single unit. Batch processing involves the execution of multiple tasks or data operations in a sequential or parallel manner, typically on a scheduled basis or when a predefined batch size is reached. Batches are often used to efficiently manage and process large volumes of data or perform complex operations that do not require real-time or immediate processing. For this reason, batch-driven applications may be thought of as synchronous applications. This is in contrast to event-driven applications which are asynchronous applications as the processing occurs once the data is received.

The local server 20 is configured to generate and receive messages in a relational data format. Relational data formats are structured and organised in tables, with rows representing records and columns representing attributes. This type of data format is commonly used in traditional database management systems and can be easily queried and manipulated using Structured Query Language (SQL). The use of a relational data format for message generation and reception at the local server 20 allows for compatibility with legacy systems and applications that rely on this type of data format.

### The Cloud Computing Environment

In contrast to conventional protected data processing systems such as the one depicted in Figure 1 where processing is performed primarily on the local server 20, the systems of the invention use a cloud-based system, i.e. cloud computing environment 10, for protected data processing. Cloud computing environment 10 provides improved scalability, flexibility, reliability, and disaster recovery capabilities over local servers. This is because the infrastructure for cloud computing environment 10 is typically provided by dedicated cloud providers such as Amazon Web Services, Google Cloud or Microsoft Azure, that handle updates and maintenance of the infrastructure.

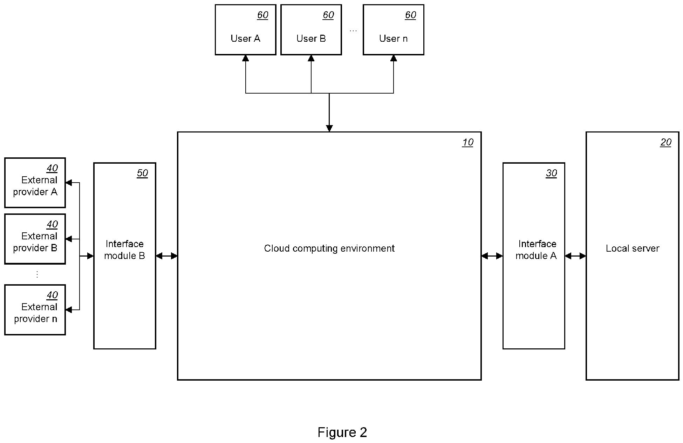

Figure 2 depicts an example system having a cloud computing environment 10 for processing protected data in which the methods of the invention may be implemented. As shown in Figure 2, the local server 20 is still present in this system. However, instead of being communicatively coupled to the plurality of user devices 60 and the plurality of external provider systems 40, the local server 20 is communicatively coupled to the cloud computing environment 10, and it is the cloud computing environment 10 which is communicatively coupled to the plurality of user devices 60 and the plurality of external provider systems 40. The communicative coupling is established via at least one communication network such as the Internet, a local area network (LAN), a wide area network (WAN), a cellular network (e.g. such as 3G, 4G LTE and 5G), and the like. Preferably, the at least one communication network utilises encryption (e.g., Secure Sockets Layer) to secure protected data being transferred to and from the cloud computing environment 10.

While the plurality of user devices 60 are able to natively couple to the cloud computing environment 10, for example via a dedicated application installed on the user device 60, local server 20 and external provider systems 60 typically contain legacy infrastructure and applications, and for this reason cannot natively be coupled to the cloud computing environment 10. This is because, unlike local server 20 and external provider systems 60 which use batch-driven applications, cloud computing environment 10 uses event-driven applications, where data is processed as events.

In the context of event-driven applications, an 'event' refers to a discrete and significant occurrence or notification within the cloud computing environment 10 that triggers a specific process. Events are used to signal that a particular condition or change has occurred and should be processed or responded to. For this reason, event-driven applications are designed to detect, capture, and respond to these events in real-time or near-real-time, allowing for responsive and dynamic behaviour within event-driven applications. Events can be generated by various sources, such as user interactions via user device 60, system events, or external sources such as external provider system 40 and local server 20, and they serve as the catalyst for initiating specific actions, processing logic, or workflows within the cloud computing environment 10.

Accordingly, interface modules are provided in the system to couple the local server 20 and the external provider systems 60 with the cloud computing environment 10. Specifically, Figure 2 shows a first interface module (interface module A) 30 that couples the local server 20 to the cloud computing environment 10, and a second interface module (interface module B) 50 that couples the external provider systems 60 to the cloud computing environment 10. Interface module A 30 and interface module B 50 may be outside and separate from the cloud computing environment. However, preferably, the cloud computing environment 10 contains interface module A 30 and interface module B 50. When interface module A 30 and interface module B 50 are provided in the cloud computing environment 10, these interface modules provide communicative coupling to the plurality of user devices 60 and the plurality of external provider systems 40, respectively.

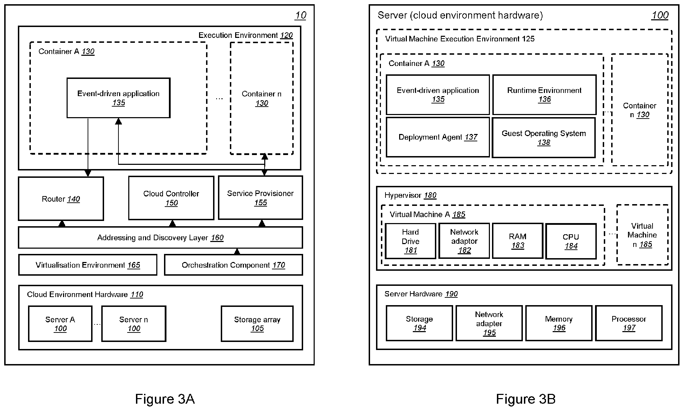

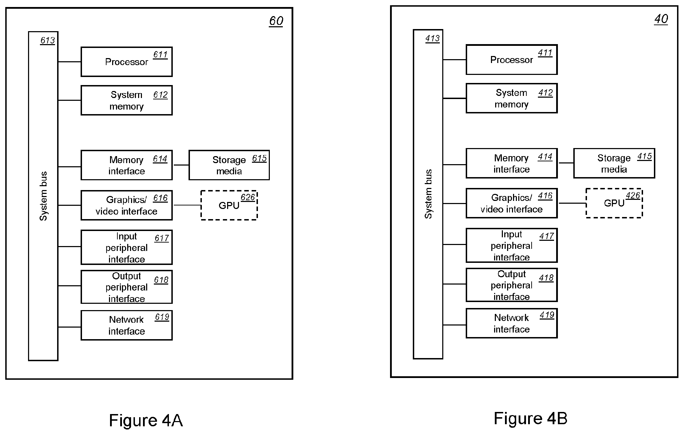

Before providing further details about cloud computing environment 10, interface module A 30, and interface module B 50, the components of cloud computing environment 10, as typically provided by a cloud provider, are discussed with respect to Figure 3A and Figure 3B. Additionally, an example user device 60 and example external provider system are discussed with respect to Figure 4A and Figure 4B.

As shown in Figure 3A, cloud computing environment 10 hosts one or more event-driven applications 135, which are executed in the cloud computing environment 10 for processing protected data that take the form of events. The event-driven application 135 may include executable and/or source code, depending on the implementation language. In this way, the computing resources required for processing protected data are moved from the local server 20, where the processing is performed in conventional systems, to cloud computing environment 10.

As seen in Figure 3A, cloud computing environment 10 comprises cloud computing environment hardware 110 that can be invoked to instantiate data processing, data storage, or other computer resources using cloud computing hardware 110 for a limited or defined duration. Cloud computing environment hardware 110 may comprise one or more physical servers 100, and a storage array network 105, as well as other suitable hardware. Cloud computing environment hardware 110 may be configured to provide a virtualisation environment 165 that supports the execution of a plurality of virtual machines 185 across the one or more physical servers 100. As described in relation to Figure 3B, the plurality of virtual machines 185 provide various services and functions for cloud computing environment 10.

Virtualisation environment 165 of Figure 3A includes orchestration component 170 that monitors the cloud computing environment hardware 110 resource consumption levels and the requirements of cloud computing environment 10 (e.g., by monitoring communications routed through addressing and discovery layer 160), and provides additional cloud computing environment hardware 110 to cloud computing environment 10 as needed. For example, if cloud computing environment 10 requires additional virtual machines 185 to host a further event-driven application 135, orchestration component 170 can initiate and manage the instantiation of the virtual machines 310 on the one or more servers 100 to support such needs. In one example implementation, virtualisation environment 165 may be implemented by running Amazon Elastic Compute Cloud (Amazon EC2) on servers 100.

Cloud computing environment 10 supports an execution environment 125 that comprises a plurality of virtual machines 185 (or plurality of containers 130) instantiated to host the one or more event-driven applications 135.

Event-driven applications 135 can access internal services provided by cloud computing environment 10 as well as external services from the plurality of external providers 40 and from the local server 20. A service provisioner 155 may serve as a communications intermediary between these available services (e.g., internal services and external services) and other components of cloud computing environment 10 (e.g., cloud controller 150, router 140, containers 130), utilising the methods discussed elsewhere herein. Addressing and discovery layer 160 provides a common interface through which components of cloud computing environment 10, such as service provisioner 155, cloud controller 150, router 140 and containers 130 in the execution environment 125 can communicate.

Cloud controller 150 is configured to orchestrate the deployment process for the one or more event-driven applications 135 in cloud computing environment 10. Typically, once cloud controller 150 successfully orchestrates the event-driven application 135 in a container, e.g. container A 130, the event-driven application 135 may be interacted with. For example, a user device 60 may interact with the event-driven application 135 through a web browser or any other appropriate user application residing on user device 60. Router 140 receives the access requests (e.g., a uniform resource locator or URL) and routes the request to container 130 which hosts the event-driven application.

It should be recognised that the embodiment of Figure 3A is merely exemplary and that alternative cloud computing environment architectures may be implemented consistent with the teachings herein.

Figure 3B is a schematic of an exemplary server 100 for implementing the cloud computing environment 10 of the invention. In particular, Figure 3B depicts server 100 comprising server hardware 190 and virtual machine execution environment 125 having containers 130 with event-driven applications 135. The server hardware 190 may include local storage 194, such as a hard drive, network adapter 195, system memory 196, processor 197 and other I/O devices such as, for example, a mouse and keyboard (not shown).

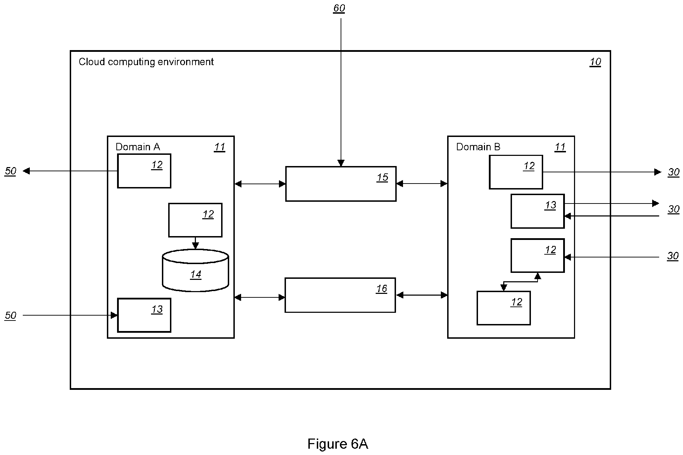

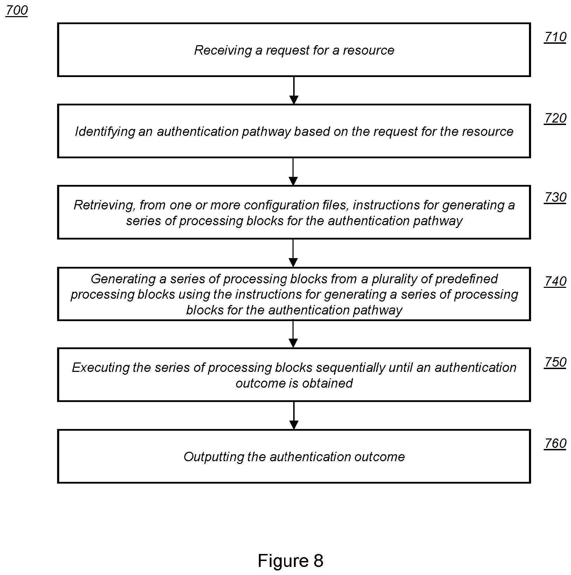

A virtualisation software layer, also referred to as hypervisor 180, is installed on top of server hardware 190. Hypervisor 180 supports virtual machine execution environment 185 within which containers 130 may be concurrently instantiated and executed. In particular, each container 130 may comprise one or more event-driven applications 135, deployment agent 137, runtime environment 136 and guest operating system 138 packaged into a single object. This enables container 130 to execute event-driven applications 135 in a manner which is isolated from the physical hardware (e.g. server hardware 190, cloud computing environment hardware 110), allowing for consistent deployment regardless of the underlying physical hardware. Therefore, in the context of cloud computing, such as for cloud computing environment 10, the use of the term processor with respect to applications/processes executed in cloud computing environment 10 may refer to the processor resources allocated to the execution of the application/process through hypervisor 180 (rather than physical individual processors). Similarly, the term memory may refer to the memory resources, transient or non-transient, which are allocated to a memory resource in cloud computing environment 10, such as data repository 14 of Figure 6A or Figure 8. If two data repositories are used in a cloud computing environment, even if these data repositories are stored on the same physical storage media, the two data repositories may be referred to as a first memory and second memory in the context of the cloud computing environment.

As shown in Figure 3B, virtual machine execution environment 125 of server 100 supports a plurality of containers 130. Docker is an example of a virtual machine execution environment 125 which supports containers 130. For each container 130, hypervisor 180 manages a corresponding virtual machine 185 that includes emulated hardware such as virtual hard drive 181, virtual network adaptor 182, virtual RAM 183, and virtual CPU 184.

It should be recognised that the various layers and modules described with reference to Figure 3B are merely exemplary, and that other layers and modules may be used with the same functionality without departing from the scope of the invention. It should further be recognised that other virtualised computer architectures may be used, such as hosted virtual machines.

Turning to Figure 4A, an example user device 60 for communicating with the cloud computing environment 10 is shown. User device 60 may be embodied as any type of computer, including a server, a desktop computer, a laptop, a tablet, a mobile device, or the like. Components of user device 60 include, but are not limited to, a processor 611, such as a central processing unit (CPU), system memory 612, and system bus 613. System bus 613 provides communicative coupling for various components of user device 60, including system memory 612 and processor 611. Example system bus architectures include parallel buses, such as Peripheral Component Interconnect (PCI) and Integrated Drive Electronics (IDE), and serial buses, such as PCI Express (PCle) and Serial ATA (SATA).

System memory 612 is formed of volatile and/or non-volatile memory such as read only memory (ROM) and random-access memory (RAM). ROM is typically used to store a basic input/output system (BIOS), which contains routines that boots the operating system and sets up the components of user device 60, for example at start-up. RAM is typically used to temporarily store data and/or program modules that the processor 611 is operating on.

User device 60 includes other forms of memory, including (computer readable) storage media 615, which is communicatively coupled to the processor 611 through a memory interface 614 and the system bus 613. Storage media 615 may be or may include volatile and/or non-volatile media. Storage media 615 may be or may include removable or non-removable storage media.

Examples storage media 615 technologies include: semiconductor memory, such as RAM, flash memory, solid-state drives (SSD); magnetic storage media, such as magnetic disks; and optical storage, such as hard disk drives (HDD) and CD, CD-ROM, DVD and BD-ROM. Data stored in storage medium 615 may be stored according to known methods of storing information such as program modules, data structures, or other data, the form of which is discussed further herein.

Various program modules are stored on the system memory 612 and/or storage media 615, including an operating system and one or more user applications. Such user applications may cause the user device 60 to interact with cloud computing environment 10. For instance, the user application may cause an event-driven application 135 to begin processing protected data on the cloud computing environment 10.

User device 60 is communicatively coupled to the cloud computing environment 10 via the least one communication network, such as the Internet. Other communication networks may be used including a local area network (LAN) and/or a wide area network (WAN). Further communication networks may be present in various types of user device 60, such as mobile devices and tablets, to cellular networks, such as 3G, 4G LTE and 5G. User device 60 establishes communication through network interface 619.

User device 60 is communicatively coupled to a display device via a graphics/video interface 616 and system bus 613. In some instances, the display device may be an integrated display. A graphical processing unit (GPU) 626 may be used in addition to improve graphical and other types of processing. User device 60 also includes an input peripheral interface 617 and an output peripheral interface 618 that are communicatively coupled to the system bus 613. Input peripheral interface is communicatively coupled to one or more input devices, such as a keyboard, mouse or touchscreen, for interaction between the user device 60 and a user. Output peripheral interface 618 is communicatively coupled to one or more output devices, such as a speaker. When not integrated, the communicative coupling may be wired, such as via a universal serial bus (USB) port, or wireless, such as over Bluetooth.

Figure 4B depicts an example external provider system 40. The components of the external provider system 40 may be the same as those described above for user device 60. In particular, the external provider system 40 may comprise a system bus 413, processor411, system memory 412, memory interface 414, storage media 415, graphics/video interface 416, GPU 426, input peripheral interface 417, output peripheral interface 418 and network interface 419. In certain embodiments, the external provider system 40 may take the form of an enterprise server.

### Cloud Computing Environment Architecture

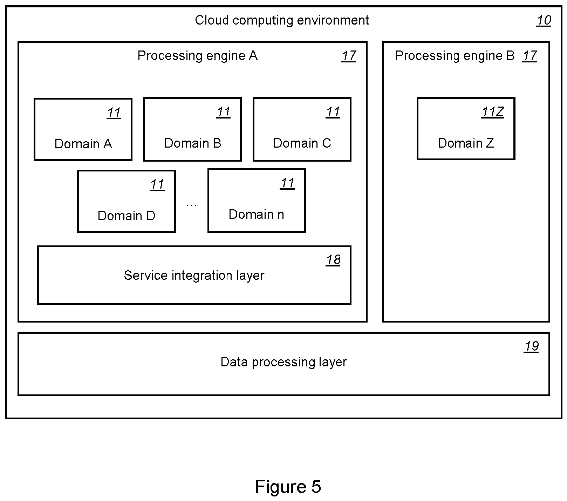

Figure 5 depicts an embodiment of cloud computing environment 10 architecture for implementing the present invention.

As shown in Figure 5, the cloud computing environment 10 contains one or more processing engines 17. Preferably, there are a plurality of processing engines 17. Figure 5 depicts two processing engines, processing engine A and processing engine B. Each processing engine 17 in the cloud computing environment 10 is a logical partition that is responsible for providing a particular processing function or subset of processing functions. Each processing engine 17 operates in an event-driven fashion. In other words, each processing engine 17 processes data as discrete events, and is able to support event-driven applications 135 of the type discussed with respect to Figure 3A and Figure 3B.

Each processing engine 17 has one or more domains 11. The domains 11 in a particular processing engine 17 provide security boundaries for protected data in the cloud computing environment 10. These domains may be separate and distinct within the cloud computing environment 10 allowing for the control of access to data based on different security levels. This separation of domains ensures that data is protected and only accessible by authorised users or applications. The domains 11 also modularise the particular processing function or subset of processing functions. Such modular architectures offer advantages such as scalability, reusability, and ease of maintenance by breaking the processing engine 17 down into smaller, interchangeable domains. Like the processing engines 17, each domain 11 processes data as discrete events and is therefore able to support event-driven applications 135 of the type discussed with respect to Figure 3A and Figure 3B. Moreover, each domain 11 may be implemented through serverless capabilities of the cloud computing environment 10. For example, when the cloud computing environment 10 is an AWS environment, such serverless capabilities may include DynamoDB, Amazon S3, AWS Lambda, AWS Elastic Container Service (ECS), AWS Fargate, AWS Step Functions, and Amazon API gateway. Optionally, each domain 17 may be composed of one or more sub domains.

Referring briefly to Figure 6A, each domain 11 contains one or more processing modules 12. The processing modules 12 are event-driven and can be used within one or more event-driven applications 135. Put another way, the processing modules 12 are agnostic to the event-driven applications 135, and therefore may be combined with other components to easily create a new event-driven application 135. This flexibility enables the cloud computing environment 10 to adapt to changing requirements and support a wide range of event-driven applications 135. When the cloud computing environment 10 is an AWS environment, each of the processing modules 12 may be hosted on AWS ECS (Container) running on EC2 or AWS Fargate.

In some examples, the domain 11 may include one or more data streams 13 that are configured to stream protected data. These data streams 13 are event-driven and may have incoming and outgoing connections to various components within the cloud computing environment 10 and outside of the cloud computing environment 10. For instance, within the cloud computing environment 10, the data streams 13 may be used to communicate data to and/or from one or more processing modules 12, one or more domains 11, one or more processing engines 17, one or more databases 14, and the like. Outside of the cloud computing environment 10, the data streams 13 may be used to communicate with local server 20 and/or external provider systems 40. In an AWS environment, such data streams 13 may be provided by Amazon Kinesis, which is a particular type of scalable and durable real-time data streaming application, or another data streaming application.

Each domain 11 may also contain one or more domain repositories 14. Domain repositories 14 may be used for different reasons, such as to log event processing occurring within the domain 11. In some examples, a domain repository 14 is configured to store protected data. In some examples, the domain repository 14 is a database. The database may be a non-relational database, such as DynamoDB, which provides a flexible and scalable approach for storing and managing data. The use of a non-relational database ensures that the cloud computing environment 10 can efficiently handle large volumes of data and support a wide range of applications.

The one or more processing modules 12, data streams 13, and domain repositories 14 work together to provide a scalable, secure, and efficient domain 11 for processing and managing protected data.

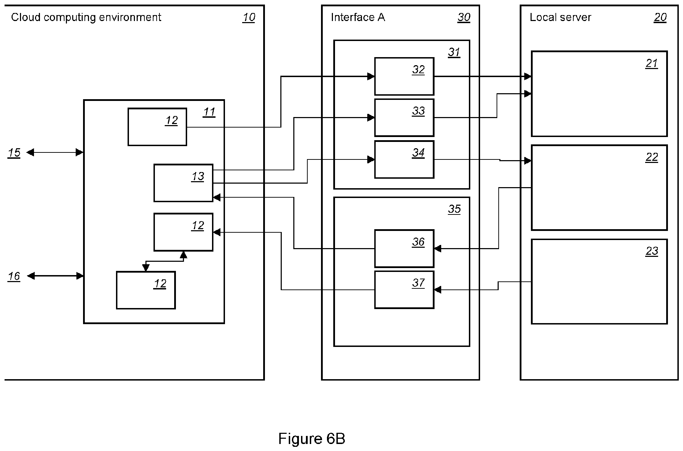

Referring back to Figure 5, processing engine 17 may contain a service integration layer 18. The service integration layer 18 is responsible for communications with local server 20. In particular, the service integration layer 18 uses APIs and/or event streaming patterns (as discussed with respect to Figure 6B) to enable standardisation and scaling for data between the processing engine 17 in the cloud computing environment 10 and the local server 20. Preferably, the service integration layer 18 includes an anti-corruption layer to facilitate integration between local server 20 (which does not support event-driven applications) to the cloud computing environment 10 (which does support event-driven applications) and vice versa.

In one particular consumer banking example, the cloud computing environment 10 is an AWS environment. In such an example, the cloud computing environment 10 includes at least two processing engines 17: processing engine A relating to financial product processing and processing engine B relating to application processing. Processing engine A 17 includes a plurality of domains 11, i.e. domains A, B, C, D... n. Such domains may include product management domains, primary domains, feature-driven domains and supplementary domains. Examples of primary domains include a payment processing domain, which manages real time account balances and supports user payment activity, and a transaction processing domain which relates to accounting and operational processing. Another example of a primary domain is an account operation domain, which controls how the execution of a process for an account is to be operated. Processing engine B includes one domain, i.e. domain Z. Such a domain may be an apply domain 11Z that is used so that a new or established user can apply to be authenticated for a resource. The apply domain may also be used to on-board new users to the cloud computing environment 10. In other words, the resource in some instances may be access to the cloud computing environment 10.

Turning back to Figure 5, the cloud computing environment 10 also includes a data processing layer 19. The data processing layer 19 provides a common aggregation point for cloud computing environment 10 for providing data to various data platforms, for further analysis and/or manipulation.

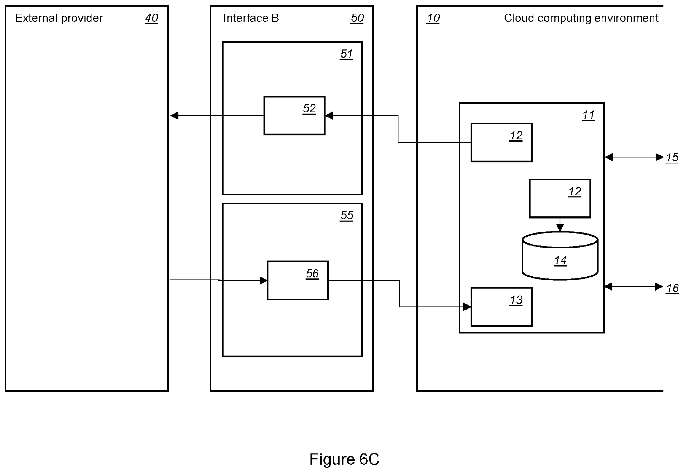

Figure 6A, Figure 6B and Figure 6C show example integration patterns of cloud computing environment 10 for implementing the invention. The integration patterns are a prescribed set of rules for connecting and coordinating different software components to and within the cloud computing environment 10. Such integration patterns particularly assist with data exchange, communication, and interoperability of various applications, including event-driven applications 135 and batch-driven applications. Figure 6A shows integration patterns within cloud computing environment 10 and from user device 60. Figure 6B depicts integration patterns between cloud computing environment 10 and local server 20, whilst Figure 6C shows integration patterns between cloud computing environment 10 and external provider system 40.

Referring first to Figure 6A, two integration patterns are shown. In particular, the cloud computing environment 10 is shown to include a first integration pattern, an inter-domain API (Application Programming Interface) 15. The inter-domain API 15 is configured to connect user devices 60 with one or more domains 11. This inter-domain API 15 allows user devices 60 to access and interact with the cloud computing environment 10, enabling users to, for example, call an application service API exposed by a domain 11 and/or access and manage their protected data securely and efficiently. In particular, this connection allows the user devices 60 to access and interact with the various processing modules 12, data streams 13, and other components within the domains 11.

In some examples, the inter-domain API 15 may provide a secure and efficient communication channel between the user devices 60 and the cloud computing environment 10. This secure communication channel may be established using various security protocols, including HTTPS, and encryption techniques to ensure the confidentiality, integrity, and availability of the data being transmitted between the user devices 60 and the cloud computing environment 10. The inter-domain API 15 may also provide various functionalities and services to the user devices 60, such as authentication, authorisation, data retrieval, data manipulation, and other application-specific operations. By providing these functionalities and services, the inter-domain API 15 enables the user devices 60 to seamlessly interact with the cloud computing environment 10 and perform various tasks and operations within the hosted applications 135.

A second integration pattern, inter-domain message bridge 16, is also shown in Figure 6A. The inter-domain message bridge 16 is positioned between two (or more) domains, and allows events in one domain to be pushed or pulled to another domain. This inter-domain message bridge 16 enables efficient communication and data transfer between domains, ensuring that data is processed and managed securely and efficiently within the cloud computing environment 10. This is particularly advantageous in a cloud computing environment 10 that comprises a plurality of domains 11 with different security boundaries and data processing requirements.

The inter-domain message bridge 16 is designed to support event-driven communication between domains 11, which is a key aspect of the asynchronous event-driven applications 135 hosted within the cloud computing environment 10. By enabling events in one domain 11 to be pushed or pulled (or "published") to another domain 11 as needed, the inter-domain message bridge 16 ensures that the processing modules 12 within the domains 11 can efficiently handle and process the protected data in an event-driven manner. The inter-domain message bridge 16 may be configured to support different event data formats, including NoSQL and JSON, to ensure compatibility with the various processing modules 12 and applications 135 within the cloud computing environment 10.

Reference is now made to Figure 6B, which depicts integration patterns between cloud computing environment 10 and local server 20. Figure 6B provides a more detailed view of the first interface module (interface module A) 30, which includes a first conversion module 31 and a second conversion module 35.

The first conversion module 31 is configured to handle outgoing data from the cloud computing environment 10 to the local server 20, and includes three integration patterns: outbound to local server API 32, fire and forget API 33, and a file batcher 34. The outbound to local server API 32 pattern is used where the local server 20 needs to consume real-time data from the cloud computing environment 10. Fire and forget API 33 is used where some of the events within the cloud computing environment 10 need to be published to the local server 20. File batcher 34 is used to collect events and consolidate the events into a scheduled batch file to provide to the local server 20.

The second conversion module 35 is configured to handle incoming data from the local server 20 to the cloud computing environment 10 and comprises two integration patterns: file debatcher 36 and inbound from local server API 37. File debatcher 36 is used to pass data from the local server, which is typically in the form of a batch file, to the cloud computing environment 10, which is event-driven. The inbound from local server API 37 is used where data is to be passed in real-time from the local server 20 to the cloud computing environment 10.

It is noted that, as shown in Figure 6B, local server 20 may comprise a plurality of partitions, such as a first partition 21, a second partition 22, and a third partition 23. These servers may be responsible for different tasks or functions related to the processing of protected data in synchronous batch-driven applications. Although three partitions are shown in Figure 6B, any number of partitions, including a single partition, may be present at local server 20.

Reference is now made to Figure 6C which shows integration patterns between cloud computing environment 10 and external provider system 40. In particular, Figure 6C provides further details of the second interface module (interface module B) 50, which includes a first conversion module 51 and a second conversion module 55. Each of the conversion modules in the second interface module 50 has its own integration pattern. In particular, the first conversion module 51 is responsible for sending protected data out to the external provider system 40 from the cloud computing environment 10, and therefore has an outbound to external provider API 52. The second conversion module 55 is responsible for receiving data from the external provider system 40 to the cloud computing environment 10, and therefore has an inbox to external provider API 56.

It should be appreciated that the architecture of cloud computing environment 10 of Figure 5 and the integration patterns of Figure 6A, Figure 6B and Figure 6C are merely exemplary. Other architectures and integration patterns may be used for implementing the invention.

### Apply Domain

As noted herein above, domain Z may be an apply domain 11Z which is configured to receive requests for resources and facilitate authentication of these requests.

In the context of apply domain 11Z, a resource can refer to any service or asset, digital or physical, to which access needs to be restricted. Digital assets may include, for example, the protected data. In other examples, digital assets may be financial resources, such as currency or cryptocurrency, and/or digital media files. Physical assets may, for example, include restricted materials, such as toxic or radioactive chemicals, financial resources, such as monetary instruments, and/or computer hardware. Further in addition or alternatively, the resource may comprise a service. For example, the service may be access to the other processing engines and/or domains in the cloud computing environment 10 (i.e. outside of processing engine B and apply domain 11Z). In other examples, the service may be the ability to access physical locations, the facility to borrow financial resources and/or the use of equipment, such as supercomputers or electron microscopes. The resource may be a single service or asset or may comprise a plurality of services and/or assets. The specific nature of the resource is beyond the scope of the present application. The present application is focused on how to obtain an authentication outcome for various resources.

For cloud-based computing using domains, dedicating the function of one domain 11, i.e. apply domain 11Z, to authenticating requests for resources further compartmentalises the processing for allowing access to resources. This increased compartmentalisation improves security by providing further security boundaries between users and domains 11 which process the resources (i.e. domains A to n). Moreover, by providing domain Z for orchestrating access to different resources based upon incoming requests, authentication for accessing different resources can be modularised, thereby improving the computational and memory efficiency of authorisation and improving the ease of maintenance of the authentication. In turn, this improves the ease with which new authentications (i.e. authentication for a new resource) can be defined and increases the possible complexity and specificity of the authentication to improve security. Similarly, providing apply domain 11Z decouples authentication from other processing functions (which are typically implemented in the other domains 11 of cloud computing environment 10), thereby improving the ease at which security vulnerabilities can be rectified and removing computational load from functionally specific domains, while also providing an optimised platform for connecting to and orchestrating authentication with one or more user devices 60, external provider systems 40 and/or local servers 20.

In the context of the present invention, apply domain 11Z is provided to orchestrate and choreograph authentication pathways based upon requests for resources. An authentication pathway defines the series of one or more processes and checks required to authenticate a request for a particular resource and thereby determine whether access to the particular resource should be provided based upon at least the request for the resource. The authentication pathway may be specific to one or more data items provided in the request for the resource. For example, a single authentication pathway may be used to authenticate every request for a particular resource (e.g. a first resource). Alternatively, an authentication pathway may be defined for each permutation of one or more of: the resource to which access is being requested, whether the requesting user is known, one or more identifying features of the requesting user and/or the user device 60 from which the request is issued, and/or any other data comprised in the request for the resource. This means that there may be several different possible authentication pathways for the particular resource.

The apply domain 11Z is intended to handle any request for a resource to which access is restricted and therefore requires authentication. The apply domain 11Z is scalable and adaptable because it is generating one or more series of processing blocks (for enacting one or more authentication pathways), upon receipt of one or more requests for one or more resources, using a plurality of predefined processing blocks and one or more configuration files for the one or more series of processing blocks. This allows for a new authentication pathway or the adjustment of an existing authentication pathway based on editing a configuration file rather than altering code associated with these authentication pathways. Processing blocks, requests for resources and methods according to the apply domain 11Z are described further herein.

In general, apply domain 11Z is responsible for identifying the correct authentication pathway for a request for a resource, sending requests for each check and process (according to an authentication pathway) to systems suitable for each check and process, receiving the result of these checks and processes, and identifying whether to continue with an authentication pathway or provide an authentication outcome. In some instances, the apply domain 11Z may also orchestrate generation of a resource and/or access to the resource. In further embodiments, the apply domain 11Z may predict the authentication outcome. In yet further embodiments, the apply domain 11Z may inform users about the status of processing a request according to an authentication pathway. In some instances, in order to maximally benefit from the security, computational efficiency, scalability, reusability and adaptability, the apply domain 11Z may request processes and checks be performed on other domains 11 or systems (such as an application channel) where applicable. In some embodiments, each processing block of an authentication pathway may involve delegation of some processing from the apply domain 11Z to another domain 11 or system (such as an application channel). In other words, because apply domain 11Z is intended to orchestrate an authentication pathway, much of the processing required for each check or task may be delegated to domains or systems optimised to perform each task and check.

### Apply Domain: Architecture

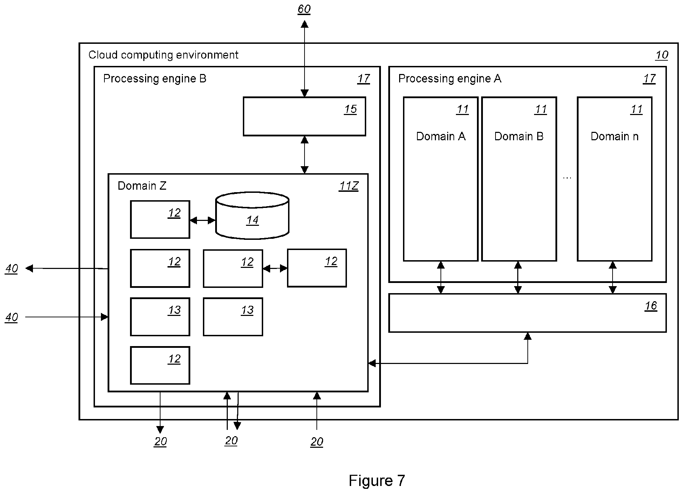

The architecture of apply domain 11Z will now be discussed. In general, the apply domain 11Z utilises the architecture and integration patterns for other domains 11 described above. For example, like other domains 11, apply domain 11Z comprises one or more processing modules 12, data streams 13, and domain repositories 14 that work together to provide a scalable, secure, and efficient domain. Figure 7 depicts an example arrangement of processing modules 12, data streams 13 and domain repositories 14. Apply domain 11Z also has several distinct architectural features. As shown in Figure 7, the apply domain 11Z may be the only domain in processing engine B 17. This configuration segregates the authentication and associated processing performed by the apply domain and each of the other domains 11, e.g. Domains A to n, thereby separating the processing of protected data and resources from the apply domain which processes requests from potentially unauthorised requesting users. Therefore, by providing a separate processing engine 17 for the apply domain 11Z, another break is formed between potentially unauthorised requesting users and domains 11 which process protected data or allow access to resources. However, in other embodiments, the apply domain may be comprised in the same processing engine 17 as one or more other domains 11.

For the apply domain 11Z to be able to enact an authentication pathway relevant to a request for a resource, it must be communicatively coupled to one or more user devices 60, external provider systems 40, domains 11 and/or local servers 20.

Communicative coupling to the one or more user devices 60 is required to receive requests for resources from the user devices 60. Communicative coupling may also be used for other purposes such as requesting to receive further information from the user device 60 for enacting checks and processes in an authentication pathway, and sending the requested resources or authorisation credentials for accessing the requested resource. In reference to Figure 7, the communicative coupling between a user device 60 and the apply domain 11Z may be facilitated by inter-domain API 15, though any other suitable data transfer channel may be utilised. In some embodiments, an application channel may be positioned as an intermediary between the apply domain 11Z and the user device 60. The application channel is the system through which the requesting user interacts with the cloud computing environment. In some embodiments, the application channel may be a program stored and executed on the user device 60 which generates the request for the resource based upon requesting user input and facilitates interactivity with the cloud computing environment 10. In other embodiments, the application channel may be a local server or cloud-based system separate from the user device 60 and the cloud computing environment 10. In this case the request for the resource will be sent and, in some cases, generated by the application channel based upon a communicative coupling between the user device 60 and the application channel. The cloud computing environment 10 does not directly communicate with the user device 60 in this embodiment, instead communicating with the application channel which does, in turn, communicate with the user device 60.

Communicative coupling to the one or more external provider systems 40 may be required to enact checks and tasks in an authentication pathway. For example, metrics or other data required by an authentication pathway may be produced or stored by an external provider 40. The communicative coupling to the one or more external provider systems 40 may be facilitated by interface B 50 as described in relation to Figure 6C.

Similarly, a communicative coupling to the one or more local servers 20 may be required to enact checks and tasks in an authentication pathway. These couplings may be required for retrieving data or requesting processes be performed on local servers. Local servers may be used in this way for a number of reasons, such as scenarios where legacy databases, which have not been migrated to the cloud computing environment 10, need to be accessed. For access to legacy databases, the local servers may comprise one or more mainframe system. The communicative coupling to the one or more local servers 20 may be facilitated by interface A 30 as described in relation to Figure 6B.

Finally, the communicative coupling to domains 11 may also be required to enact checks and tasks in an authentication pathway. For example, to enact checks and tasks which are processed in cloud computing environment 10, rather than a local server 20 or external provider system 40, it may be necessary that the apply domain 11Z request that these checks and tasks be performed by a domain 11 whose function is to perform said checks and tasks. The apply domain 11Z may not comprise a comprehensive database of data in the cloud computing environment 10, nor does the apply domain 11Z necessarily process the individual checks or tasks which determine whether the resource can be accessed. Protected data and tasks and checks referring to this protected data, such as determining how much information is known about a requesting user or determining the risk level posed by a requesting user, are preferably performed by domains 11 other than the apply domain 11Z (which can simply request that these tasks and checks be performed for a specific request based upon an authentication pathway). This communicative coupling of the apply domain 11Z to the other domains 11 may be facilitated by inter-domain message bridge 16.

In each case the communicative couplings described above are generally two-way, allowing calls to be made by the apply domain 11Z and responses received by the apply domain 11Z in return such that the authentication pathway for a given request can be followed and access to a resource either can be granted or denied.

For the apply domain 11Z to function, one or more data repositories are required. Accordingly, the apply domain 11Z comprises one or more domain repositories 14 (one data repository is depicted in Figure 7 for the purpose of illustration only) for such purposes. The data stored in the one or more domain repositories 14 may comprise: one or more configuration files, a plurality of predefined processing blocks, and one or more series of processing blocks generated by the apply domain based on one or more of the one or more configuration files. In some embodiments, data stored within the one or more domain repositories 14 may further comprise any of: one or more requests for resources, one or more authentication outcomes, one or more state definitions, one or more audit logs, one or more authentication processing payloads and/or one or more execution progress indicators. In one embodiment, the data stored in the one or more domain repositories 14 may be stored in one domain repository 14 implemented using, for example, Amazon S3 or AWS DynamoDB. Preferably, a schemaless datastore, such as AWS DynamoDB, is used, particularly if only one domain repository 14 is implemented. In other embodiments, the one or more domain repositories 14 may comprise one or more of: a state datastore, a policy datastore and/or a process block datastore. It is understood that while the state datastore, policy datastore and process block datastore are referred to as separate entities herein, one or more of these datastores may be combined into a single schemaless datastore, such as AWS DynamoDB. In one embodiment, the state datastore and the policy datastore may form part of a single schemaless domain repository 14 implemented as a schemaless datastore, such as DynamoDB.

A configuration file is a file which comprises instructions for generating a series of processing blocks according to a request for the resource. A configuration file may be implemented as a file format with multiple data fields. For example, a configuration file may be a YAML file, a CSV file, a JSON file, an XML file or any other file type using delimiters to separate data. Preferably, a configuration file is a JSON file. A configuration file may comprise one or more of: a policy name, a policy type, a policy validity indicator and one or more sets of instructions for generating a series of processing blocks. In some embodiments, the configuration file has a configuration file name, and each set of instructions for generating a series of processing blocks stored in the configuration file has associated with it: a policy name, a policy type and a policy validity indicator. Generally, a policy name may identify one set of instructions. In other embodiments, the policy name may be the configuration file name. A configuration file name may identify the resource or resources to which the one or more set of instructions comprised in the configuration file relate. A policy type may define the purpose of a set of instructions for generating a series of processing blocks. In some embodiments, the policy type is associated with the resource to which a request relates. For example, a policy type may specify that a set of instructions for generating a series of processing blocks is for accessing a specific type of resource and/or specific conditions for accessing that resource. A policy validity indicator may define the conditions which need to be satisfied by a request for the resource to utilise one set of instructions of the configuration file. In other words, a policy validity indicator may indicate the one or more conditions that a request for the resource should satisfy for one set of instructions of the configuration file used to generate a series of processing blocks for authentication. Generally, each set of instructions for generating a series of processing blocks may comprise a series of instruction fields, each field comprising data identifying a task and/or check to be performed for proceeding with the authentication pathway which the set of instructions relates to. The data identifying a task or check comprises at least data indicative of the type of task or check to be performed. Generally, each instruction field identifies at least a predefined processing block which should be executed in order to complete a task and/or check. In further embodiments, the data identifying a task or check may specify parameters for executing the task or check, inputs to the task or check, outputs from the task or check and/or other data utilised for defining how a task or check should be executed. For example, where an instruction field identifies a predefined processing block for execution, the instruction field may further identify parameters for configuring execution of the predefined processing block (according to the requirements of the set of instructions) and/or input data for input into a processing block in the series of processing blocks generated according to the set of instructions.

Processing blocks are modular processes which are ordered to form a series of processing blocks that defines an executable process for enacting the checks and tasks of an authentication pathway relevant to accessing a resource. Each processing block in the series of processing blocks may define a task or check (i.e. a computer-executable process) required to be completed in the authentication pathway. In some embodiments, the computer-executable process may be intended for execution at the apply domain 11Z to complete the task or check. However, execution of a task or check wholly within the apply domain 11Z is not generally computationally efficient when systems optimised for performing each task and check exist. Therefore, the processing blocks may be remotely executable at a local server 20, external provider system 40 or domain 11 which is optimised and/or has access to data required for completing the task or check. In other embodiments, the processing blocks are executed at the apply domain 11Z but serve only to orchestrate the execution of a task or check. For instance, the processing block may define a process wherein a local server 20, external provider system 40, domain 11 or application channel is called with data sufficient to perform a check or task. In this way, the check or task can be performed by an appropriate domain, server or system, with the apply domain remaining in control of, and being apprised of the current state of, the processing of the authentication pathway. Generally, where the task or check is not performed solely at the apply domain, the output of the task or check will be sent to the apply domain 11Z, but in some processing blocks an acknowledgement of completion of the task or check (in the form of, for example, a signed token) may be all that the apply domain requires to receive for continuing with the next processing block(s) defining the authentication pathway. The processing blocks may define processes in accordance with the action patterns described herein. The plurality of processing blocks may comprise processing blocks which are executed in each way described above.

Generally, processing blocks will be predefined and each predefined processing block will be configurable, allowing the specification of configuration parameters which define how the processing block executes. For example, each processing block may be configured while generating a series of processing blocks according to instructions in the relevant configuration file. In this way, fewer processing blocks need to be predefined and stored, improving memory usage efficiency and making the invention more able to adapt to implement new authentication pathways without the need to define additional processing blocks. A default configuration may exist for each configurable processing block, such that, if no configuration parameters are defined by instructions in a configuration file, the configurable processing block executes according to the default configuration. In some instances, predefined processing blocks may not be configurable. For example, where a task can only be executed in one way, no configuration of the predefined processing block associated with that task is possible. A processing block may be an independently executable program written in any coding language, such as Java, Go, PowerShell, Node.js, C#, Python, Ruby and/or any other suitable coding language. In some embodiments, processing blocks which are independently executable programs may be implemented using serverless services such as AWS Lambda, AWS Lambda step functions, Azure functions, Google Cloud Functions, Oracle Cloud OCI Functions and/or Alibaba Function Compute. In other embodiments, the independently executable programs may be containerised (for example using AWS Elastic Container Service (ECS)) and executed using an appropriate compute service, such as AWS Fargate, AWS EC2 or AWS ECS Anywhere (if AWS EC2 is used to implement the containerised program). Preferably processing blocks which are independently executable programs are implemented using AWS Lambda or AWS ECS depending on the performance and provisioning requirements of the independently executable program. Alternatively, a processing block may define a specific task or check which should be executed within a running program. For example, a processing block may define that a requesting user notification should be sent, wherein sending the requesting user notification comprises posting an event to a data stream 13. In this example, the event may be sent using any data stream service, such as AWS Kinesis, and, additionally, the event may be predefined such that only the addressee needs to be defined. Programs implemented using AWS ECS may also be already running on an appropriate compute service.

In some embodiments, it may be advantageous to further standardise some or all of the plurality of predefined processing blocks using standardised processes that can be set-up for the performance of any task or check which a predefined processing block may be designed to perform. These standardised processes are herein referred to as action patterns, which may be a form of integration pattern. Action patterns may also be used in access generation processing blocks as defined herein.

One action pattern may be an event driven action pattern. In the event driven action pattern, a local server 20, external provider system 40 or domain 11 may be called by apply domain 11Z or the application channel, and data may be received and processed at apply domain 11Z from the local server 20, external provider system 40 or domain 11 in response to the call.

Another action pattern may be a client confirmation action pattern. The client confirmation action pattern enables apply domain 11Z to instruct the application channel through which the requesting user is applying to call a local server 20, external provider system 40 or domain 11 and acknowledges this to apply domain 11Z once the local server 20, external provider system 40 or domain 11 has been called.

Additionally, a proxy action pattern may be utilised. The proxy action pattern may be substantially similar to the client confirmation action pattern, differing only in that the application channel calls a proxy system within apply domain 11Z which then calls the local server 20, external provider system 40 or domain 11, instead of directly calling the local server 20, external provider system 40 or domain 11, such that no acknowledgement to the apply domain that the call has been made is required. The proxy system may be an application or processing block executed in apply domain 11Z.

An action pattern for handling requesting user opt-outs may also be required. In an exemplary opt out action pattern, in response to instruction from the apply domain or without prompt, a requesting user may opt out of a step in the authentication pathway or receiving/configuring the resource or a part of the resource by sending data to apply domain 11Z (via the application channel or otherwise).

Finally, a time-based action pattern may be used for the apply domain 11Z to call a local server 20, external provider system 40 or domain 11 at a pre-determined time or once a pre-determined time has elapsed. While 5 action patterns are disclosed, any other action pattern may be used in connection with apply domain 11Z.

At the beginning or end of each action pattern, the application channel may be provided with the next steps required of it, such as the steps required for processing of the next processing block. In this way, action patterns can be chained together to facilitate the execution of the series of processing blocks via an application channel. Additionally, for the execution of some processing blocks via an action pattern, the apply domain 11Z may not be concerned with the way in which a task is completed, merely that the task is completed and confirmation can be received from the application channel. In some embodiments, confirmation from the application channel may comprise a signed token. Therefore, for at least the event driven and client confirmation action patterns, the apply domain 11Z may only provide instructions to an application channel identifying the task or check which needs to be completed. For other processing blocks, however, the apply domain may provide instructions for the specific details of how a task or check must be executed.

An execution progress indicator is a data entity configured to store data relevant to the current state of the execution of a series of processing blocks (for authenticating access to a resource). The execution progress indicator comprises an active state field which may store the state definition or a unique state definition identifier for the currently active state. Optionally, the execution progress indicator may comprise a previous state field which may store the state definition or a unique state definition identifier for one or more previously active states. Generally, the previous state field will only identify or store the state definition corresponding to the state immediately preceding the currently active state. The execution progress indicator may additionally store one or more of: a process identifier, a requesting user identifier, a timestamp, a request channel identifier and/or any other data relevant to defining the state of executing a series of processing blocks. A process identifier may identify the configuration file and/or authentication pathway upon which the executing series of processing blocks was generated. Additionally or alternatively, the process identifier may store data from the request for the resource which is used to identify the authentication pathway. The requesting user identifier may comprise any data which can be used to identify the requesting user relevant to the request for the resource. The request channel identifier may comprise data for identifying how the request for the resource was received. The timestamp may identify the time at which the current state was entered. The active state field corresponds to a state definition, wherein state definitions comprise data identifying a specific state that may be entered in the process of executing a series of processing blocks. For example, a state definition may comprise one or more of: a state definition identifier, entry conditions for the state, exit conditions for the state, data defining subsequent and/or preceding states and/or the decisioning instructions required to determine which state definition to use next. In this way, a state can be defined at a more granular level than identifying the processing block which was currently being executed without saving the execution progress of the processing block. This state storage approach therefore limits the computational complexity of the system by preventing the need for individualised storage formats for each executing processing block while also allowing execution of a processing block to be interrupted and restarted based upon the execution progress indicator. The previous state field similarly identifies a state definition for at least the previous state of execution of the series of processing blocks.

An audit log may also be generated to record the execution of the series of processing blocks. The audit log may comprise one or more of: the process identifier, the requesting user identifier, the authentication outcome (once an authentication outcome has been issued), a timestamp indicating when execution of a series of processing blocks commenced, a timestamp indicating when execution of a series of processing blocks finished (once an authentication outcome has been issued) and/or a timestamp indicating when the request for the resource was received. In addition, the audit log may comprise records of one or more states of execution of the series of processing blocks. For example, the audit log may record each state identifier replaced in the active state field during the execution of the series of processing blocks.

Generally, an authentication processing payload will also be generated for assisting in the execution of a series of processing blocks. The authentication payload is configured to store all information required by the execution of processing blocks according to an authentication pathway. For example, the authentication processing payload may store any or all of the data comprised in the request for the resource and any data received as the output of or during the execution of a processing block. In certain embodiments, the authentication processing payload may comprise the authentication outcome once it is generated. The authentication processing payload may be stored in the state datastore or any other suitable data repository 14 of apply domain 11Z. The one or more requesting user identifiers and/or process identifiers may also be stored in the process payload. In this way, the authentication processing payload shares identifiers with any related execution progress indicator(s), allowing the authentication processing payload to be easily identified. If an authentication processing payload is stored for processing of an authentication pathway according to a request for a resource, the execution progress indicator associated with the processing of this authentication pathway according to the request for the resource is not required to store any values which may be required as input for the execution of any processing block or the generation of an authentication outcome. However, in other embodiments, the execution progress indicator may still store input and, if available, output data for the currently executing processing block. Once an authentication outcome is generated, part or all of the data in the authentication processing payload may be transferred to the audit log for the request for the resource. In other embodiments, the audit log may be updated to comprise this data as each processing block executes according to the authentication pathway.

The one or more domain repositories 14 may include a state datastore. The state datastore is configured to at least store one or more execution progress indicators and a plurality of stored state definitions. In some further embodiments, the state datastore may be further configured to store one or more requests for resources, one or more audit log, one or more authentication processing payloads and/or one or more authentication outcomes. The state datastore may be implemented as a database. In alternative embodiments, the state datastore may be implemented as any other data structure suitable for persistent storage of data. Generally, the state datastore is implemented as part of apply domain 11Z. However, in some embodiments, the state datastore may comprise part of another domain 11 or local server 20 communicatively coupled to apply domain 11Z. The state datastore may be a non-relational database implemented as, for example, an Amazon Dynamo DB database, a MongoDB database, an Amazon MemoryDB database, or an Amazon Neptune database. Generally, the state datastore is a NoSQL (non-relational) database, preferably an AWS Dynamo DB NoSQL database. In other embodiments, the state datastore may be a relational database implemented as, for example, an Amazon Aurora database, an Oracle database, a Microsoft SQL Server database, a MySQL database, a Postgre SQL database or a MariaDB database. If the state datastore is an SQL (relational) database, the state datastore is preferably a Postgre SQL database.

The one or more domain repositories 14 may include a policy datastore configured to store the one or more configuration files. In some embodiments, the policy datastore may form part of the state datastore. In other embodiments, the policy datastore may be implemented in a separate domain repository 14 to the state datastore, for example a NoSQL database. In some embodiments, the policy datastore is an AWS Dynamo DB NoSQL database.

Additionally, in some embodiments, the one or more domain repositories 14 may include a process block datastore configured to store one or more of the plurality of predefined processing blocks. Some predefined processing blocks, particularly those which are defined as tasks to be executed in already running programs, may not need to be stored in a domain repository 14 with any other predefined processing blocks as instructions for generating these predefined processing blocks can be stored in the relevant program, wherein the program may act as a domain repository 14 for the predefined processing blocks which form part of the program. These predefined processing blocks are effectively stored with the program which they are tasks according to. However, other predefined processing blocks, such as predefined processing blocks which are independently executable programs, can be stored in a process block datastore. The process block datastore may be implemented as a database. Where process blocks are implemented using AWS lambda (or any other suitable serverless product), the process block datastore may be one or more AWS S3 bucket. Where process blocks are implemented via AWS ECS in Java based code, the process blocks may be stored as Docker images and the process block datastore may be any suitable memory location from which the Docker images can be pulled to AWS ECS.

### Apply Domain: Authentication

The embodiment of Figure 8 is a flow diagram indicating a method for authenticating a request for a resource using an apply domain (i.e. apply domain 11Z as shown in and discussed with respect to Figure 5 and Figure 7) to reach and output a first authentication outcome for the request for the resource. The method is applicable to requests for any resource as defined herein, such as a first resource, a second resource, a third resource, etc. (where the specific resources to which these terms relate is beyond the scope of the present application). Similarly, the method is applicable to multiple requests for the same resource, such as a first request and a second request which each relate to a first resource.

At step 710, the apply domain 11Z receives a request for a resource. The request is made by a requesting user. As disclosed herein, generally, the requesting user is a natural entity, such as a person utilising a user device 60. In some embodiments, the requesting user may be a plurality of persons utilising a user device 60. In other embodiments, there may be no natural entity associated with the requesting user, such that the user device 60 originates the request automatically. Generally, input(s) for generating the request for the resource or the request for the resource itself will be sent to an application channel before being sent to apply domain 11Z. In some embodiments, all data transferred between apply domain 11Z and the requesting user will be processed for presentation to the requesting user by the application channel. The application channel may be a program executed on user device 60 or a program executed on a local server or cloud-based system to which user device 60 and cloud computing environment 10 are communicatively coupled. The request for a resource may be received at a request intake utility which intakes the request for the resource at apply domain 11Z through an API, an event stream or an event queue. The request intake utility may be an independently executable program in apply domain 11Z or may form part of one or more other programs which are executed within apply domain 11Z. The API may be Inter-domain API 15. The API may be synchronous or asynchronous. Additionally or alternatively, the request may be converted to an event-compatible format at the user device or an intermediate processing interface in cloud computing environment 10 (which receives the request before apply domain 11Z). In some embodiments, the request may be generated in a format suitable for use as an event, thereby requiring no conversion to an event-compatible format. The event may be received at the apply domain through an event stream or event queue, where the event stream and/or event queue may additionally be used to receive other events relevant to the apply domain 11Z, such as from local servers 30 or external provider systems 40. The event stream may be an AWS Kinesis event stream.

The request for the resource may be generated at any suitable computational system, such as the user device 60, the application channel, or any processing engine 17 in cloud computing environment 10. Generally, the request for the resource will be generated at the user device 60. In other embodiments, the user device may collect data from the requesting user which may be formatted into the request for the resource by the cloud computing environment 10. In some embodiments, the request may be for more than one resource. In some embodiments, the requesting user may not specify a specific resource in their request. For example, the requesting user may only indicate a type of resource to which they would like access, or, alternatively, the requesting user may indicate a resource with no parameters for that resource (such as the amount of the resource that they are seeking). In other embodiments, the requesting user may not be aware that they are requesting a resource. For example, in some scenarios a requesting user may be performing actions which require access to the resource to enact. To facilitate the actions of the requesting user, user device 60 (or any other suitable computational system, such as the application channel or any processing engine 17 in cloud computing environment 10) may generate and send the request for the resource to cloud computing environment 10.

The request for the resource comprises one or more identifiers for the resource including at least an indication of the type of resource to which access is required. The request for the resource may also comprise any of: one or more identifiers for identifying the requesting user (herein a user identifier), a timestamp indicating when the request for the resource was generated, a unique identifier for the request and/or one or more identifiers for identifying the origin of the request. The timestamp indicating when the request for the resource was generated and/or the one or more identifiers for identifying the origin of the request may be collectively referred to as request generation data as this, collectively, is the data identifying how and when the request for the resource was made, which may be pertinent to security. Identifiers for identifying the origin of the request include any identifying information related to how the request was generated and/or sent. Therefore, the one or more identifiers for identifying the origin of the request may include a request channel identifier comprising data for identifying how the request for the resource was received. For example, the request for the resource may have been generated and sent by the application channel, such as by a mobile app, by email or by a website which may be recorded as a request channel identifier. Moreover, the request may be generated and sent from within a restricted portion of the application channel which requires login credentials to access; the portion of the application channel used to generate the request may also be recorded within the request channel identifier. The one or more identifiers for identifying the origin of the request may also include one or more of: user device 60 identifiers (such as serial number(s), MAC address(es), IP address(es), or any other suitable device identifier), user device 60 type and model, the network connection used to send the request for the resource (such as the type of connection and any relevant identifiers) and/or location of the user device 60. If the request for the resource is issued through a form (from within an app or website), one or more user identifier such as name, age, nationality, gender, residency, social security/national insurance number, identity document numbers, addresses, whether the requesting user is known, whether the requesting user has previously requested a resource and/or any other recordable characteristics which are relevant to the request may be required before the request for the resource is sent. Alternatively, if the requesting user is known and uses a user device 60 storing one or more user identifier, or logs in to a restricted portion of an application channel to generate the request for the resource, the request for the resource may be automatically populated with relevant user identifiers according to data stored on the user device 60 or data associated with the login used to access the restricted portion of an application channel respectively. In further embodiments, at any point after receiving the request for the resource, data may be retrieved by any suitable application in apply domain 11Z relating to previous requests made by the requesting user and/ other historical activity data for the requesting user. The historical activity data may be compiled, at least in part, from audit logs for previous requests for resources made by the requesting user. The historical activity data may be appended to the request for the resource and/or the request processing payload for use in the execution of one or more processing blocks and/or in the generation of an authentication outcome.

Once the request for the resource is received at the apply domain 11Z, it can be processed by the apply domain 11Z. In several scenarios, it may be preferable to give the requesting user an indication of whether the request for a resource is likely to be successful and/or how likely the request is to be successful. This may avoid the unnecessary computational load of processing requests which are likely to fail. In addition, this feedback allows the requesting user to manage risk and abort a request which is likely to fail. Aborting a request in this manner may avoid the repercussions of one or more checks required to access a resource, such as the credit score impact of a hard credit check or so as to avoid being added to publicly-available databases. To assess whether a request for a resource is likely to be successful, a pre-eligibility assessment program can be executed within apply domain 11Z. The pre-eligibility assessment program may determine whether the request for the resource is likely to be successful by reviewing one or more data fields in the request for pre-determined success indicators. The pre-eligibility assessment program may estimate a predicted authentication outcome of executing the first series of processing blocks based upon the request for the resource. The pre-determined success indicators may be identified manually. Alternatively, the pre-determined success indicators may be generated based upon previously successful and/or unsuccessful requests for the resource. The pre-determined success indicators may be generated based on execution progress indicators and/or audit logs with authentication outcomes. The pre-determined success indicators may be updated periodically. The pre-eligibility assessment program may provide a likelihood of success automatically in response to the request for the resource or in response to input from the requesting user or application channel. In some cases, the likelihood of success may be provided in response to a request being partially filled with data in an application channel. In each case, either the likelihood of success is determined and sent to the requesting user as a probability (or using any appropriate gradated scheme) or the predicted authentication outcome is sent to the requesting user. The requesting user is then given the opportunity to abort processing of the request for the resource, this opportunity may be controlled and/or facilitated by the application channel. If the request for the resource is aborted, the method ends, however the aborted request may be retained in a suitable data repository on the cloud computing environment 10.

The request for the resource may be validated. The validation may be executed by a standalone validation program. The validation program may be triggered by receipt of the request for a resource at the apply domain 11Z. In some cases, the request itself may trigger the execution of the validation program. In other embodiments, an event generated in response to receipt of the request for the resource at the apply domain 11Z may trigger the validation program. In order to validate the request for the resource, one or more checks may be performed to ascertain if the request for a resource comprises the necessary minimum information and correct formatting to be processed. To achieve this, the validation program may retrieve, from a schema registry communicatively coupled with the validation program, a schema for the request for the resource. The schema registry may form part of the cloud computing environment 10. Preferably the schema registry is implemented as an AWS Glue registry. The validation program may then compare the formatting of the request and data provided in the request to the retrieved schema in order to check that each expected data field in the request is identifiable and comprises the correct type of and/or formatting of data. In some embodiments, where errors are detected in the formatting of the request for the resource, the validation program may correct these in accordance with the retrieved schema. In some embodiments, if fields are not filled and/or if fields are not filled with the correct type of data, the request for the resource may be returned to the user device 60 for correction. Other forms of data and formatting validation may also be implemented. In some embodiments, the event generated from the request for the resource may be validated. In further embodiments, the request for the resource may be stored in a suitable permanent data repository on the cloud computing environment 10 before it is validated. The validation may alternatively be executed by an orchestration program which organises the processing initiated by the receipt of the request for the resource across steps 720 to 760 of method 700.

An orchestration program is executed in response to receiving a request for a resource. The orchestration program is generally configured to manage the execution of the series of processing blocks. For instance, the orchestration program may comprise state management capabilities as described further herein, such that the execution progress indicator and/or the audit log may be amended and maintained by the orchestration program in line with the execution of the series of processing blocks. In other words, the orchestration program may be responsible for managing the state of execution of the series of processing blocks by comprising the functionality of a state machine. The orchestration program may, additionally or alternatively, be responsible for initiating and providing input to processing blocks as well as receiving outputs resulting from the execution of the processing blocks. Therefore, the orchestration program may be able to control whether the next processing block in the series of processing blocks should be executed. This control of whether the next processing block should be executed may be based upon the state definition identified in the active state field, particularly when the state definition identified in the active state field changes. The orchestration program may also amend, and retrieve information from, the authentication processing payload. The orchestration program may further be configured to initiate processing blocks or otherwise respond to out-of-turn queries from a requesting user. If the request for a resource is to be validated, this occurs before any subsequent method steps, such as step 720, occur. Generally, the orchestration program is implemented as an AWS lambda function or, preferably, an AWS Lambda step function, comprising several ordered sub-programs, such as programs suitable for state management and initialising or otherwise commencing execution of processing blocks according to the series of processing blocks. Any other method of implementing steps 720 to 760 in cloud computing environment 10 is also anticipated. Before step 720, a status check sub-program may be executed to ascertain whether the request for a resource is new. The status check sub-program may compare information comprised in the request for the resource to one or more execution progress indicators in a domain repository 14, such as the state datastore described herein. If sufficient data fields in an execution progress indicator match fields in the request for the resource, the request for the resource may be rejected. If the request for the resource is rejected, a rejection notification may be provided to the user device to indicate this rejection. The rejection notification may comprise reasoning as to why the request for the resource was rejected. Alternatively, if an execution progress indicator is identified which relates to a pending authorisation attempt for the requested resource by the requesting user, execution of processing blocks according to the pending authorisation attempt stored in the identified execution progress indicator may recommence in accordance with the execution progress indicator that relates to a pending authorisation attempt for the requested resource and step 750.

At step 720, an authentication pathway is identified based on the request for the resource. Generally, the orchestration program in the apply domain 11Z will perform step 720. To identify the authentication pathway based on the request for the resource, a policy datastore, such as a domain repository 14 configured to store configuration files, may be queried to locate a configuration file relevant to the authentication pathway based upon data comprised in the request for the resource. Specifically, the policy datastore may be queried to locate a configuration file comprising instructions for generating a series of processing blocks for the authentication pathway which pertains to the request for the resource. Therefore, through identifying the relevant configuration file (or, in cases where the configuration file comprises more than one set of instructions, identifying the relevant configuration file and relevant set of instructions) based on the request for the resource, the relevant authentication pathway for the request for the resource can be identified. In some cases, the configuration file name for a configuration file and/or the policy validity, the policy type and/or policy name for a set of instructions in a configuration file may be compared to data from the request for the resource to determine the set of instructions and/or configuration file corresponding to the appropriate authentication pathway for the request for the resource.

Any data from the request for the resource can be used to identify the configuration file and set of instructions corresponding to an appropriate authentication pathway for the request for the resource. The data from the request for the resource used to identify a configuration file and set of instructions is determined by the specificity of situation which authentication pathways have been predefined for. For example, if it is considered that requesting users from a specific region should follow a different authentication pathway, the address and or location of generation of the request for the resource might be used to identify the configuration file and set of instructions. Generally, identifiers for the resource requested will be utilised to query the policy datastore to locate the relevant configuration file for the request for the resource. Additionally, in some embodiments, one or more identifiers for identifying the origin of the request for the resource and one or more user identifiers may also be used to identify the configuration file and/or set of instructions. Preferably, one or more identifiers for the resource requested, data for identifying how the request for the resource was received (such as the application channel through which the request for the resource was received) and an identifier to indicate whether the requesting user is known and/or has previously requested a resource are used to identify the configuration file and set of instructions corresponding to an appropriate authentication pathway for the request for the resource. In some embodiments, to improve the security of the system, the data for identifying how the request for the resource was received and an identifier to indicate whether the requesting user is known and/or has previously requested a resource is populated by the apply domain 11Z. The data for identifying how the request for the resource was received can be identified by the apply domain by recording the application channel from which the request for the resource was sent. The identifier to indicate whether the requesting user is known and/or has previously requested a resource can be identified by querying one or more datastores, such as domain repository 14, to find historical data for a requesting user based on one or more user identifier. In one embodiment where configuration files may comprise more than one set of instructions, the one or more identifiers for the resource requested may be used to identify the configuration file, and data for identifying how the request for the resource was received and the identifier to indicate whether the requesting user is known may be used to identify the relevant set of instructions in the identified configuration file.

In some embodiments, more than one set of instructions stored in one or more configuration files is required to enable the authentication pathway corresponding to the request for the resource to followed in subsequent steps of the method. For example, if a requesting user has never requested a resource before, they may need to be subject to one or more broader authentication checks alongside the specific checks required to access the requested resource. For example, if the requesting user has not interacted with cloud computing environment 10 before, they or their associated user device 60 may need to pass one or more broader authentication checks to access the cloud computing environment 10. Known requesting users, particularly those requesting users who have previously received a positive authentication outcome, may not be subject to the broader authentication checks. In this case, the instructions corresponding to the broader series of checks may be stored independently of those specific to the requested resource. Alternatively, multiple resources may be requested in the request for the resource, necessitating an authentication pathway to be followed for each resource. To facilitate these cases without requiring specific authentication pathways and sets of instructions to be stored for each edge case, multiple configuration files and sets of instructions can be retrieved from the policy database. While a single authentication pathway and set of instructions is referred to herein, sets of instructions corresponding to one or more authentication pathways (resulting from the request for the resource) can be processed in parallel or sequentially in accordance with the teachings herein.

At step 730, instructions for generating a series of processing blocks for the authentication pathway are retrieved from the one or more configuration files identified in step 720. Generally, the orchestration program in the apply domain 11Z will perform step 730. To retrieve the instructions, each set of instructions identified in step 720 can be read and retained in storage for the completion of one or more of the following steps. In some embodiments, the instructions of the set of instructions may be stored in transient memory for processing. In some embodiments, the instructions of the set of instructions may be retrieved in their entirety. Alternatively, one instruction from the set of instructions may be retrieved and processed in accordance with steps 740 and/or 750 before the following instruction of the set of instructions is retrieved.

At step 740, a series of processing blocks is generated from a plurality of predefined processing blocks using the instructions for generating a series of processing blocks for the authentication pathway. Generally, the orchestration program in the apply domain 11Z will perform step 730.

As disclosed herein, processing blocks are modular processes which are ordered by the present invention to generate series of processing blocks which define an executable process for enacting an authentication pathway relevant to accessing a resource. These processing blocks may be any computer-executable processes, such as independently executable programs or specific processes within a program. The processing blocks may be configurable or non-configurable depending upon the task or check the processing block is designed to perform. The processing blocks may be configured using configuration parameters. The processing blocks may be configured in accordance with the action patterns described herein.

Generally, a predefined plurality of processing blocks will be stored in one or more domain repositories 14, such as a process block datastore. The predefined plurality of processing blocks comprises predefined processing blocks sufficient to perform or otherwise facilitate completion of each step in the instructions corresponding to an authentication pathway across every set of instructions stored in configuration files in the policy datastore. Where possible, the predefined processing blocks are generalisable, such that they can be used to fulfil the completion of the same task or check in multiple sets of instructions. This modularity and generalisability provides memory efficiency, maintenance reduction and adaptability improvements as described hereinabove.

The set of instructions retrieved in step 730 is configured to define a series of processing blocks, which may be configured with configuration parameters that may also be received with the instructions, made up of the predefined processing blocks. The predefined processing blocks may be repeated in the series of processing blocks. Generally, only a subset of all the predefined processing blocks will be used to generate the series of processing blocks. If no configuration parameters are defined in the instructions for a predefined processing block, the default configuration of this processing block may be used. The instructions may define a series or list of names of predefined processing blocks (alongside any configuration parameters associated with each named predefined processing block), preferably in JSON format, further preferably where the names are stored as strings. Based upon this list of names of predefined processing blocks, the relevant predefined processing blocks can be identified in their respective process block datastore(s).

In some embodiments, the named predefined processing blocks in the retrieved instructions can be retrieved and ordered to generate a complete series of processing blocks before execution. The generation of a complete series of processing blocks avoids any need to repeat step 740 following an interruption, but also introduces memory inefficiencies due to the need to store the complete series of processing blocks. Therefore, where a serverless architecture of predefined processing blocks is prevalent (such as where the predefined processing blocks are implemented using AWS lambda functions or AWS ECS), one processing block of the series of processing blocks may be generated and executed (in accordance with step 750) before the next processing block defined by the retrieved instructions is generated. This is particularly important for some processing blocks which require inputs corresponding to the outputs of prior processing blocks, thereby necessitating that these processing blocks be configured just in time for execution. In this way processing blocks are generated only where required for immediate processing and the series of processing blocks does not need to be stored in memory and initialised for execution in its entirety.

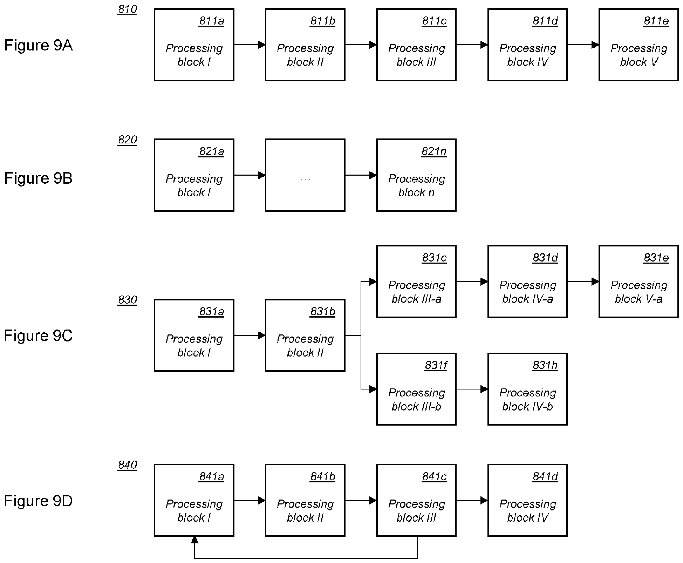

Turning to Figure 9, a series of processing blocks can define a variety of different structures of processing blocks. For example, a series of processing blocks may comprise a linear series of a predetermined number of processing blocks. Figure 9A defines a linear series of 5 processing blocks (811a, 811b, 811c, 811d, 811e) while Figure 9B defines a linear series of n processing blocks (821a to 821n), where n is any integer number. The linear series structure is sufficient to describe, in a computer executable format, most authentication pathways. Generally, series of processing blocks are linear series of processing blocks. Figure 9C defines a series of processing blocks with a branch following processing block II 831b. In accordance with Figure 9C, the series of processing blocks will execute such that processing block II 831b follows processing block I 831a. However, following processing block II 831b are the sub-series of processing blocks III-a to V-a (831c, 831d and 831e respectively) or III-b to IV-b (831f and 831h respectively). In some embodiments, only one of the sub-series of processing blocks may be executed. Alternatively, both sub-series of processing blocks may be executed in parallel or series. The decision of which sub-series of processing blocks to execute may be determined by the execution of processing block II 831b and/or a secondary/higher-level program (such as the orchestration program) based upon one or more outputs of processing block II 831b. Finally, Figure 9D shows a linear series of processing blocks I to IV (841a, 841b, 841c and 841d) where, following the execution of processing block III 841c, processing blocks I (841a) or IV (841d) may be executed. The decision of whether to proceed to processing block IV 841d or execute processing blocks I, II and III (841a, 841b and 841c respectively) again may be determined by the execution of processing block III 841c and/or a secondary/higher-level program (such as the orchestration program) based upon one or more outputs of processing block III 841c. While only four structures of series of processing blocks are shown in figure 9, any structure of processing blocks is compatible with the method disclosed herein.

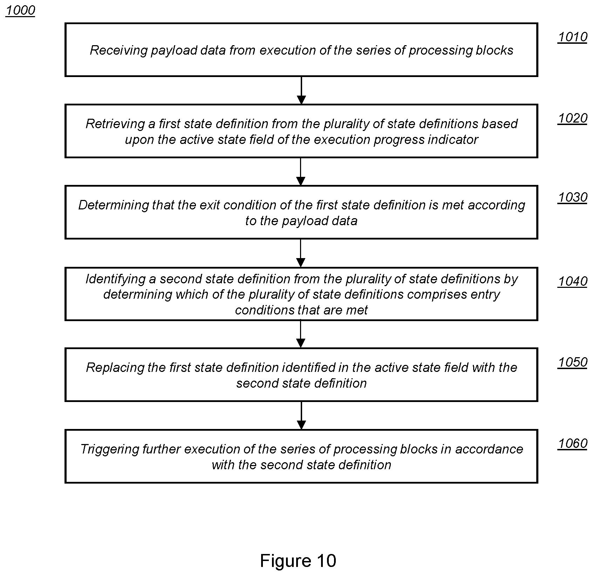

At step 750, the series of processing blocks is executed sequentially until an authentication outcome is obtained. In some embodiments, such as where each processing block is generated and executed sequentially, the initiation of execution of each processing block may be controlled by the orchestration program in the apply domain 11Z. In other embodiments, such as where the series of processing blocks is generated in its entirety at step 740, the execution of one processing block or the output of one processing block may trigger the execution of the subsequent processing block. The triggering of the subsequent processing block may result from the execution of one processing block or the output of one processing block causing a second state definition to become identified in the active state field of an execution progress indicator instead of a first state definition, as described in relation to Figure 10 herein.

Execution of a processing block refers to the running of the process to which the processing block relates in order to perform a task or check. Generally, execution of a processing block will require input data to be provided to the processing block before and/or during execution and may further result in output data being produced during the execution of the processing block. In some processing blocks, input data may not be required for execution of the processing block, but output data may still be produced through execution of the processing block.

As described herein, in some embodiments, the processing blocks are configured to execute their respective task entirely within apply domain 11Z, communicating with external provider systems 40, local servers 20 and/or other domains 11 only where it is necessary to retrieve existing data for the execution. However, as described herein, security, computational/memory efficiency and adaptability benefits can all be derived from increased modularity of the apply domain. Specifically, by architecting apply domain 11Z such that it orchestrates authentication through outsourcing much of the processing required for enacting an authentication pathway to one or more external provider systems 40, local servers 20, an application channel and/or other domains 11, the apply domain operates with minimal computational overhead (passing tasks to systems, servers and domains which are optimised for processing specific tasks) while also acting as an intermediate layer which prevents direct communication between requesting users and their user devices 60 and domains/servers which store and directly access protected data (thereby improving system security), such as those found in processing engine A 17 depicted in Figure 5. As described herein, this security improvement may be compounded by operating apply domain 11Z in a separate processing engine 17 to the processing engine operating each other domain 11 of cloud computing environment 10 (i.e. processing engine B 17 depicted in Figure 5). Therefore, generally, the execution of processing blocks, for which the task being performed is not to communicate with the requesting user, requires one or more external provider systems 40, local servers 20 and/or other domains 11 to be called for execution of the task.

During execution of a processing block, one or more external provider systems 40 may be communicated with. Generally, the one or more external provider systems 40 will be requested to execute an external provider process. Data produced by the external provider process may be returned to the apply domain, such as to the processing block or the orchestration program. In other embodiments, the apply domain may only receive an acknowledgement that the external provider process has occurred, such as by receipt of a signed token. External provider processes may be processes which the cloud computing environment is not able to perform due to, for example, legislative constraints or an inability to access data relevant to the external provider processes. In one embodiment, one or more external provider systems 40 may be called by the processing block to perform an identity check on a requesting user. In this scenario, the external provider system may be called with one or more user identifier (such as the user identifier comprised in the request for the resource) as input data and may return output data comprising a confirmation or denial of the authenticity of the identity of the requesting user. Any process which can be performed by an external provider system may be an external provider process. Other examples of external provider processes include the performance of Know Your Customer (KYC) checks, criminal history checks, checks regarding the requesting user's existing access to resources (such as a credit check) and/or other suitable credential/background checks. As disclosed herein, communication with the one or more external provider systems 40 may be facilitated by Interface B 50 as described in relation to Figure 6C. In accordance with the apply domain architecture disclosed herein, the processing block may call, and provide inputs to, the one or more external provider systems 40 using one or more asynchronous and/or synchronous API calls. If an external provider system of the one or more external provider systems 40 is contacted using a synchronous API call, output data of the external provider process may be received at the apply domain 11Z through an API response. If the external provider system of the one or more external provider systems 40 is contacted using an asynchronous API call, the processing block (or a subsequent processing block) may poll the external provider system for a response comprising output data of the external provider process or a response comprising output data of the external provider process may be provided to apply domain 11Z via a webhook by the external provider system once the external provider process is complete.

During the execution of some processing blocks, one or more local servers 20 may be communicated with. As disclosed herein, the one or more local servers 20 may be facilitated by Interface A 30 as described in relation to Figure 6B. Similar to communication with the external provider system(s) 40, generally, the one or more local servers 20 will be requested to execute a local server process. A local server process may be similar to an external provider process, differing only in that the local server process is performed by a local server.

During the execution of some processing blocks, one or more domains 11 may be communicated with. The other domains communicated with form part of the cloud computing environment 10 but may not form part of the same processing engine 17 as apply domain 11Z, such as domains A to n in Figure 7. Generally, as disclosed herein, the one or more domains may be communicated with from the apply domain 11Z using inter-domain message bridge 16 in accordance with Figure 7. Specifically, a domain of the one or more domains 11 may be requested to execute a domain process and be provided with input data using an event posted to an event stream or event queue (such as an event stream facilitated by inter-domain message bridge 16) by the processing block, which will reach the requisite domain. A response event from the domain 11 may be received and/or retrieved at the apply domain 11Z using the same (or a similar) event stream or event queue (such as an event stream facilitated by inter-domain message bridge 16). A domain process may be similar to an external provider process or local server process, differing in that the domain process is performed by a domain 11 of cloud computing environment 10. However, as the domain 11 executing the domain process is able to communicate with external provider systems 40 and local servers 20, the domain 11 may further interact with and/or call external provider systems 40 and local servers 20 in the same way that a processing block executed in the apply domain 11Z may be able to. Moreover, unlike local server processes or external provider processes, domains 11 are able to access data stored in cloud computing environment 10, such as requesting historical activity data. Similarly, domain processes may be decisioning processes configured to determine whether the request for the resource should be authenticated based upon data comprised in the request for the resource and/or data, such as output data, from processing blocks.

In some embodiments, external provider systems 40 may not process protected data, and therefore, communication between the external provider systems 40 and the application channel through which the request for the resource was received need not be handled with the apply domain 11Z as an intermediary. As such, a processing block, which requires a check or task to be performed by an external provider system 40, may call the application channel with instructions for calling the external provider service. This interaction can be implemented using an action pattern, such as the proxy application pattern, the event driven application pattern or the client confirmation action pattern. Generally, the processing block will receive an acknowledgement (in the form of a signed token or otherwise) when the application channel has called the external provider service 40 and/or the processing block or orchestration program will receive the response from the external provider service 40 (if the external provider service 40 provides a response). This configuration avoids calls being made to the requesting user or application channel for data required as input before the processing block calls the external provider service 40, thereby improving computational efficiency while not sacrificing security. Where it is not critical for the input data to a domain 11 or local server 20 to be carefully adjusted for compatibility and/or vetted for malicious data, instructing the authentication channel to call domains 11 or local servers 20 is also possible.

It may be beneficial to prevent apply domain 11Z from orchestrating processes executed by individual processing modules 12 associated with the requirements of an authentication pathway. Therefore, in some embodiments, the number of calls made by apply domain 11Z can be reduced by designing predefined processing blocks such that an external provider system 40, local server 20 or domain 11 can be requested to perform a process requiring several processing modules 12 before providing output data to the apply domain 11Z.

In some embodiments, output data received from an external provider system 40, local server 20 or domain 11 can be received and processed by the processing block which: requested that the external provider system 40, local server 20 or domain 11 perform a process; requested that the application channel calls the external provider system 40, local server 20 or domain 11 perform a process; and/or provided input data to the external provider system 40, local server 20 or domain 11. In other embodiments, a processing block may cease execution after: requesting that an external provider system 40, local server 20 or domain 11 perform a process; requesting that the application channel calls the external provider system 40, local server 20 or domain 11 perform a process; and/or providing input data to the external provider system 40, local server 20 or domain 11. If a processing block ceases execution in this manner it may provide no output or it may output notification data confirming that the external provider system 40, local server 20, application channel or domain 11 has been called. Furthermore, when the output data is received at the apply domain 11Z, this output data and/or the response may be used to trigger a subsequent processing block or otherwise trigger further execution of the series of processing blocks. Generally, triggering of further execution of the series of processing blocks, whether this involves execution of a subsequent processing block or otherwise, is caused by the output data and/or the response resulting in a change of state definition identified in the active state field. For example, in some embodiments, the orchestration program identifies the output data and triggers execution (and, optionally, generation of) a subsequent processing block in accordance with the present state of execution of the series of processing blocks according to the retrieved instructions. The orchestration program may therefore process output data resulting from the execution of processing blocks and provide inputs to initialise processing blocks prior to their execution. In some embodiments, the output data may be used as input to a subsequent processing block. In other embodiments, the output data may be stored in memory, such as a state datastore, in the apply domain 11Z for use in later processing blocks in the series of processing blocks.

Some processing blocks may serve to send notifications to, request further input data from and/or receive further input from the requesting user. The notifications may be sent to the application channel for presentation to and interaction from the requesting user. In other embodiments, these notifications may be sent directly to the requesting user, for example as an email. Some of these processing blocks may also request that the external provider system 40, local server 20 or domain 11 perform a process and/or provide input data to the external provider system 40, local server 20 or domain 11. Calling the application channel and the external provider system 40, local server 20 or domain 11 can be avoided by calling the application channel with instructions for calling the external provider system 40, local server 20 or domain 11. If the application channel performs a task or check (particularly where the apply domain 11Z delegates responsibility to the application channel such that the application channel calls the external provider system 40, local server 20 or domain 11) the apply domain 11Z may not need to know any outputs of that task or check. If no outputs of the task or check are required, the apply domain 11Z may only require that a signed token is provided by the application channel, the signed token comprising data attesting that the task has been completed. The signed token may be authenticable by apply domain 11Z, such that the apply domain 11Z can verify that the application channel sent the signed token. Generally, data for notifying and/or requesting input is provided to the application channel as an event sent using an event stream, such as AWS Kinesis, or an API call.

Execution of a series of processing blocks will end when an authentication outcome is reached. An authentication outcome is the final decision as to whether a requesting user is authenticated to access the resource identified in the request for the resource. Therefore, an authentication outcome is the output of the execution of the series of processing blocks to authenticate access to the resource according to an authentication pathway. Authentication outcomes can be positive or negative. If an authentication outcome is negative, no access to the resource will be authorised. If the authentication outcome is positive, access to the resource, in full or in part, will be authorised. Access to the resource resulting from a positive authentication outcome may be subject to restrictions identified in the authentication outcome.

An authentication outcome can be reached during or after the execution of any processing block. In some embodiments, a positive authentication outcome is only issued following the final processing block in a series of processing blocks. This approach to issuing positive authentication outcomes simplifies instructions for the series of processing blocks and may improve security by ensuring that all processing blocks, and therefore authentication tasks, have been completed prior to issuing a positive authentication outcome. In alternative embodiments, a positive authentication outcome may be issued during or after the execution of any processing block, including any non-final processing block. This approach to issuing positive authentication outcomes allows for reactive handling of the request for a resource by permitting a positive authentication outcome to be issued as soon as the requirements for issuing the positive authentication outcome are met, thereby avoiding excess processing of subsequent processing blocks and reducing the time taken to reach an authentication outcome. Generally, negative authentication outcomes may be issued during or after the execution of any processing block (including non-final processing blocks), though in other embodiments negative authentication outcomes may only be issued during or after the execution of one or more specific processing blocks in the series of processing blocks, such as the final processing block in the series of processing blocks.

In some embodiments, the authentication outcome is determined during the execution of a processing block and is subsequently output from the processing block. The processing block responsible for generating an authentication outcome may be a processing block dedicated to decisioning, however it is also envisaged that the execution of any processing block can result in the output of an authentication outcome if required. The orchestration program may be configured to issue a positive or negative authentication outcome in response to an output resulting from any processing block. For example, an execution progress indicator may be updated by a state management system (which may form part of the orchestration program) of apply domain 11Z to indicate that a state definition has been reached which corresponds to a specific authentication outcome or indicates that an authentication outcome should be generated. If the state definition identified in the active state field indicates that an authentication outcome should be generated, the orchestration program or any other suitable program in apply domain 11Z may generate the authentication outcome based on, the state definition identified in the active state field, the request for the resource and/or one or more outputs of the processing blocks (for example, any data stored in an authentication processing payload). In some embodiments, the program responsible for generating the authentication outcome may call one or more external provider system 40, local server 20 or domain 11 to assist with, provide additional data for and or generate the authentication outcome. In other embodiments, the authentication outcome may be generated by the orchestration program or any other suitable program in apply domain 11Z in response to an output of a processing block and/or in accordance with the instructions for generating the series of processing blocks. In some embodiments, the processing blocks in a series of processing blocks responsible for generating outputs which are directly used to determine an authentication and/or processing blocks which generate the authentication outcome itself are referred to herein as a judgement set of processing blocks. In the series of processing blocks, the tasks and checks performed by executing one or more of the processing blocks may not provide outputs and/or complete processes which directly contribute to the generation of the authentication outcome. The processing blocks in the first series of processing blocks which, when executed, do not directly contribute to the generation of the authentication outcome, are not considered to form part of the judgement set of processing blocks. In some embodiments, the judgement set of processing blocks will be the final processing block in the series of processing blocks, wherein the final processing block is configured to generate the authentication outcome, such as a decisioning processing block. In other embodiments, if a plurality of processing blocks, when executed, may generate the authentication outcome or amend the authentication outcome, the judgment set of processing blocks of the first series of processing blocks may comprise this plurality of processing blocks.

In some embodiments, an authentication outcome may be binary, providing data to indicate whether the resource can be accessed by the requesting user or not. In other embodiments, if the authentication outcome is positive, the authentication outcome may comprise more than one populated fields of authentication outcome data, such as any of; one or more identifiers for the resource to which access is to be granted, one or more restriction indicators and/or other data pertinent to the resource and/or access to the resource. The one or more identifiers for the resource to which access is to be granted identify the specific resource to which access is to be granted. The one or more restriction indicators identify the restrictions placed upon the authorised access to the resource. Types of restriction indicator which the authentication outcome may comprise include: a restriction indicator indicating a part of the resource to which access is authorised (thereby denying access to the remaining parts of the resource); a restriction indicator indicating the type of resource to which access is authorised; a restriction indicator indicating the amount of resource to which access is authorised; a restriction indicator indicating the entities authorised to access the resource, including an indication of whether the requesting user is personally authorised to access the resource (generally the requesting user alone will be authorised to access the resource); a restriction indicator indicating a temporal restriction on access to the resource; a restriction indicator indicating the number of times a resource may be accessed; and/or one or more restriction indicators providing any additional restriction upon access to the resource. In some embodiments, the restriction indicator indicating a temporal restriction on access to the resource may comprise data indicative of an authorisation revocation time. The authorisation revocation time indicates a time after which the resource will no longer be accessible based upon the authentication outcome. In other embodiments, the restriction indicator indicating a temporal restriction on access to the resource may comprise data indicative of an authorisation revocation time period. The authorisation revocation time period indicates a span of time for which the resource may be accessed based upon the authentication outcome. After the authorisation revocation time period has elapsed, the resource cannot be accessed based upon the authentication outcome. In some embodiments, one or more restriction indicators may be obtained by a decisioning processing block or any other processing block responsible for outputting an authentication outcome. Additionally or alternatively, one or more restriction indicators may be generated by the orchestration program of apply domain 11Z or any other suitable program in apply domain 11Z based upon the request for the resource and one or more outputs of the processing blocks in the first series of processing blocks (for example, any data stored in an authentication processing payload). Additionally or alternatively, one or more restriction indicators may be predetermined by the instructions used to generate the series of processing blocks or one or more state definitions used to identify a state of a stage of the execution of the series of processing blocks.

If an authentication outcome is negative, no further processing is required by apply domain 11Z to prevent the requesting user from accessing the resource. Once a negative authentication outcome has been generated, execution of the series of processing blocks can end and, if no further processes occur, the current accessibility of the resource will be maintained, thereby preventing the requesting user from accessing the resource.

In some embodiments, it is advantageous to process and respond to inputs from the requesting user, application channel or administrator while execution of the series of processing blocks is interrupted due to an absence of data. For example, the requesting user, the application channel or the administrator may send an input to the apply domain to request the status of executing the series of processing blocks for the request for the resource. In order to respond to the query, the apply domain 11Z may generate and send a status notification based upon the execution progress indicator in the state management system for the series of processing blocks. The status notification may explain which authorisation step is currently being executed. In some embodiments, to improve security, it is advantageous to not disclose the authentication pathway to the requesting user or application channel; in these embodiments, the status notification will indicate whether execution of the series of processing blocks is pending and due to recommence. A status notification sent to the administrator may be the same as the status notification sent to the requesting user. However, in other embodiments, the status notification sent to the administrator may comprise one or more elements of data stored in the execution progress indicator to assist in troubleshooting delayed execution of a series of processing blocks.

In some embodiments, it is advantageous to verify the authentication outcome in one or more ways prior to or parallel to proceeding with step 760. For example, similar to validation which may be performed with respect to the request for the resource at step 710, the authentication outcome may be verified by being validated. Specifically, an authentication outcome validation program may determine whether the authentication outcome comprises data and formatting in line with expected data and formatting for the authentication outcome. The authentication outcome validation program may form part of a processing block or the orchestration program or an independently executable program within apply domain 11Z. In some embodiments, the validation program for the request for the resource is the authentication outcome validation program. To achieve validation, the authentication outcome validation program may retrieve, from the schema registry, such as the AWS GLUE registry, a schema for the authentication outcome. The schema for the authentication outcome may be compared to the authentication outcome to assess whether discrepancies in the data or formatting of the authentication outcome exist. Additionally or alternatively, verifying the authentication outcome may comprise reviewing, manually or computationally, the authentication outcome and any associated execution progress indicator and/or audit log to confirm that the authentication pathway has been followed. In some embodiments, the reviewing may comprise ascertaining whether any steps have been skipped and/or whether abnormal data has been input to or output from any process block executed from the first series of processing blocks. In other embodiments, the data used to determine whether an authentication outcome should be issued will be subject to further assessment. All authentication outcomes may be verified in the same way, however in some cases only select authentication outcomes may be verified. Additionally or alternatively, the steps for verifying authentication outcomes may vary for select authentication outcomes. Select authentication outcomes may be identified based upon abnormal execution of the series of processing blocks, the resource requested, and/or any other factor affecting the generation of the authentication outcome.

At step 760, the authentication outcome is output. In some embodiments, the authentication outcome is output from the program/processing block responsible for generating the authentication outcome and stored in memory, such as in the state datastore. The authentication outcome may be stored in or associated with the execution progress indicator for the series of processing blocks which resulted in the generation of the authentication outcome. In some embodiments, the execution progress indicator and authentication outcome will be concatenated for storage, audit and/or other additional processing. Additionally or alternatively, the authentication outcome may be output to the requesting user. Generally, it is beneficial for a program in the apply domain 11Z to format the authentication outcome as an event for presentation as a notification to the requesting user. A processing block in the series of processing blocks may be configured to generate and send a notification for the requesting user based upon the authentication outcome. However, the authentication outcome may be output to the requesting user in any format. If the authentication outcome is negative, generally the authentication outcome or a notification based upon the authentication outcome will be output to the requesting user or application channel so that the authentication pathway is clearly finished from the perspective of the requesting user. A notification for the requesting user based on a negative authentication outcome is herein referred to as a denial notification. The denial notification may additionally identify causes for negative authentication outcome and/or comprise a request for the requesting user to or not to provide further request(s) for the resource (based upon whether the cause for the negative authentication is rectifiable) and/or comprise one or more retry suggestions indicating what is required for a successful request for the resource if further request(s) for the resource may be submitted by the requesting user.

If the authentication outcome is positive, the authentication outcome may additionally comprise authorisation credentials for accessing the resource. The authorisation credentials for accessing the resource may be consistent with restriction indicators in the positive authentication outcome. The authorisation credentials for accessing the resource may be generated by the program/processing block responsible for generating the positive authentication outcome. Alternatively, the authorisation credentials may be appended to the positive authentication by a processing block/program of apply domain 11Z in response to the positive authentication outcome. The authorisation credentials may comprise one or more of: a cryptographic key, a password, identifier data and/or a certified document. In some embodiments, the authorisations may be unique or unique to the resource. In other embodiments, the authorisation credentials are the same for each positive authentication outcome.

A notification for the requesting user based on a positive authentication outcome is herein referred to as an authorisation notification. In some embodiments, an authorisation notification is not provided as the requesting user will be alerted to the completion of the execution of the series of processing blocks by receiving access to the resource. However, if access to the resource is enabled by authorisation credentials in the positive authentication outcome, an authorisation notification comprising the authorisation credentials must be provided. Generally, an authentication notification will be provided to the application channel for provision to the requesting user.

In some embodiments, apply domain 11Z is additionally configured to facilitate access to the resource and/or facilitate generation of the resource without providing authorisation credentials comprised in the authentication outcome. The instructions for generating a series of processing blocks may further comprise instructions for generating a supplementary series of access generation processing blocks which may be executed in response to a positive authentication outcome based upon: the request for the resource, the positive authentication outcome, one or more outputs of previously executed processing blocks in the series of processing blocks and/or any other relevant data accessible by apply domain 11Z. The series of access generation processing blocks may be configured to generate and or provide access to the resource in accordance with any restriction indicators or other requirements for accessing the resource identified in the instructions. A predefined plurality of access generation processing blocks may be stored in the same way as processing blocks executed in step 750 and are substantially similar to the processing blocks executed in step 750, differing only in that the access generation processing blocks are configured to fulfil tasks which facilitate accessing and/or generating the resource rather than authenticating access to the resource. The series of access generation processing blocks may be generated and executed similar to the generation and execution of the series of processing blocks in steps 740 and 750 based upon the instructions used to generate the series of processing blocks.

Generally, the access generation processing blocks will require one or more domains 11 to process protected data in order to provide access to the resource. Notably, as access generation processing blocks are executed only once a positive authentication outcome has been generated, the access processing blocks may all be configured to call the application channel with instructions for calling domains 11 directly or via a proxy due to security concerns being assuaged by the recent positive authentication outcome. Action patterns may be utilised to implement these access processing blocks. In these implementations, the apply domain 11Z may provide a token to the application pathway for the call such that the domain 11 may validate any direct call from the application channel to domain 11.

In some embodiments, access to the resource may still be contingent upon contractual agreements being completed by the requesting user. For example, non-disclosure agreements, terms of service and/or any other legal obligation may require a contract to be generated, sent to the requesting user, returned, signed by the requesting user and, optionally, verified before access to the resource can be granted. Alternatively, in other embodiments, a contract may be the resource requested by the requesting user. Therefore, one or more access generation processing blocks may be configured to generate, send, receive and verify contracts, signed or un-signed, based upon setup option data comprising any of: the request for the resource, the positive authentication outcome, one or more outputs of previously executed processing blocks in the series of processing blocks and/or any other relevant data accessible by apply domain 11Z. Preferably, a contract is generated based upon at least the positive first authentication outcome.

In other embodiments, the resource may be an item or access to the resource may be achieved through possession of an item. Additionally, the item may need to be configured. In this embodiment, one or more access generation processing blocks may be configured to orchestrate the transfer (to the requesting user) and, optionally, configuration of the item. In other embodiments, the resource may be digital, such as protected data. In these embodiments, the resource may be encrypted. Therefore, one or more access generation processing blocks may be configured to decrypt or orchestrate the decryption of the resource.

The apply domain may be configured to process a plurality of requests for a plurality of resources (i.e. a first resource, a second resource, etc.) made by a plurality of requesting users in parallel in accordance with method 700 by implementing method 700 using serverless architecture as described herein. In this way, the processing capability of apply domain 11Z can be adjusted to meet the demand generated by requests for resources. In some embodiments, requests for resources may be processed sequentially in accordance with method 700. The resources and requesting user and data comprised in each request for a resource may not be the same as a prior or parallel request for a resource. Dependent upon the configuration files in apply domain 11Z, the series of processing blocks generated for each request may comprise different processing blocks and/or a different order of processing blocks. Alternatively, if two requests for the same resource are sufficiently similar, identical series of processing blocks may be generated for each request.

### State Management System

As discussed in relation to Figure 8, apply domain 11Z comprises a state management system. The state management system may be or form part of the orchestration program. The state management system is configured to store the present and, optionally, previous states of executing the series of processing blocks as one or more execution progress indicators as defined herein. The present state of the execution of the series of processing blocks corresponds to a state definition. The present state of the execution of the series of processing blocks is stored in the active state field of the execution progress indicator for the execution of the series of processing blocks by identifying (or, in some embodiments, directly storing) the state definition for the present state therein. Generally, the active state field comprises the state definition identifier for the state definition corresponding to the present state. Each state definition identifier may be unique to the state definition to which it relates and is comprised within. In some embodiments, the active state field will only identify one state definition at any instant, therefore, in these embodiments, the active state field may store only one state definition identifier.

In some embodiments, it is beneficial for improving system resilience of the state management system (and to provide input for certain entry conditions of state definitions) for the execution progress indicator to comprise a previous state field as described above. The previous state field stores the state definition stored or identified in the active state field of the execution progress indicator immediately preceding the state definition currently stored or identified in the active state field. Generally, the previous state field comprises the state definition identifier for this preceding state definition. In some embodiments, the previous state field will only identify one state definition at any instant, therefore, in these embodiments, the previous state field may store only one state definition identifier. In this way, when the state of executing the series of processing blocks changes, the previous state field is overwritten with the data stored in the active state field and a state definition from the plurality of state definitions is stored or otherwise identified in the active state field, overwriting the data previously stored in the active state field. To improve traceability of previous states in the active state field, an audit log (as described above) may be used to store at least the state definition identifier for each state definition identified in the active state field of the execution progress indicator corresponding to an execution of a series of processing blocks.

Entry and exit conditions form part of each state definition to allow the state management system to determine whether the state definition identified in the active state field should change and if so which state from the plurality of stored state definitions could be subsequently entered to succeed the state definition in the active state field.

An exit condition may comprise one or more exit prerequisites, wherein for the exit condition to be met one or more of these exit prerequisites must be fulfilled. In some embodiments all exit prerequisites must be fulfilled for the exit condition to be fulfilled. In some embodiments, the exit condition only comprises one exit prerequisite. Exit prerequisites may comprise thresholds that selected data must meet and/or exceed or fall below. Additionally or alternatively, exit prerequisites may comprise a range which selected data must fall within or outside of. Further additionally or alternatively, exit prerequisites may require that selected data is of a data type or matches a schema and/or is exactly baseline value. Selected data for exit pre-requisites comprises payload data received from execution of the series of processing blocks and may further comprise one or more part of the authentication processing payload corresponding to execution of the series of processing blocks, one or more part of the execution progress indicator (particularly the previous state field) corresponding to the execution of the series of processing blocks, one or more part of the audit log corresponding to the execution of the series of processing blocks and/or any other data relevant to the execution of the series of processing blocks.

An entry condition may comprise one or more entry prerequisites, wherein for the entry condition to be met one or more of these entry prerequisites must be fulfilled. In some embodiments all entry prerequisites must be fulfilled for the entry condition to be fulfilled. In some embodiments, the entry condition only comprises one entry prerequisite. Entry prerequisites may comprise thresholds that selected data must meet and/or exceed or fall below. Additionally or alternatively, entry prerequisites may comprise a range which selected data must fall within or outside of. Further additionally or alternatively, entry prerequisites may require that selected data is of a data type or matches a schema and/or is exactly baseline value. Selected data for entry prerequisites comprises payload data received from execution of the series of processing blocks and may further comprise one or more part of the authentication processing payload corresponding to the execution of the series of processing blocks, one or more part of the execution progress indicator (particularly the active state field and the previous state field) corresponding to the execution of the series of processing blocks, one or more part of the audit log corresponding to the execution of the series of processing blocks, the configuration data for the series of processing blocks and/or any other data relevant to the execution of the series of processing blocks.

The state management system is used to determine which processing block should be generated and/or executed in accordance with steps 740 and 750. For example, a processing block and/or a particular part of a processing block in the series of processing blocks may only be executed when one or more specific state definitions are identified in the active state field. Therefore, while the processing blocks are executed in a series defined by (or otherwise as configured according to) the configuration file relevant to the request, execution of the series of processing blocks in accordance with the configuration file is triggered by the state management system, particularly the state definition identified in the active state field. In this way the state management system can ensure that the series of processing blocks is executed correctly, orderly and completely as required for providing an authentication outcome. The state management system may also be used to retrieve data for populating one or more inputs for: processing blocks and/or the program for determining an authentication outcome in accordance with the state definition identified in the active state field of the execution progress indicator.

The apply domain comprises a plurality of stored state definitions. The execution progress indicators for one or more executing series of processing blocks and/or the plurality of state definitions may be stored in the state datastore as defined herein. Generally, an authentication processing payload comprises the outputs of executed processing blocks and/or the request for the resource, however the execution progress indicator may, additionally or alternatively, comprise this data.

The state definition identified in the active state field is used for handling interrupts to execution of the series of processing blocks and, in some embodiments, the state management system is responsible for handling interrupts to execution of a series of processing blocks. As such, the status check sub-program referred to in respect of step 720 of Figure 8 may form part of the state management system which is dedicated to handling interrupts to execution of a series of processing blocks. Interruptions to the execution of a series of processing blocks may occur due to a number of reasons, such as when continued execution of a series of processing blocks is contingent on data from a response to an asynchronous API call, requesting user input, or the output of a process executed in the application channel or a domain which is not apply domain 11Z. Additionally, interrupts may be intentionally requested or otherwise caused by the requesting user, such as a predetermined (maximum threshold) time being exceeded between user inputs. Further additionally, interrupts may be intentionally requested by an administrator of any portion of the cloud computing environment 10, for security, maintenance, software update or other reasons. Following an interrupt, the execution of the series of processing blocks may need to be recommenced following the reason for the interrupt being removed and restart trigger data being received. For example, the restart trigger data may comprise the data required for continued execution of the series of processing blocks, which may be received from a local server 20 or external provider system 40. Alternatively, the execution of the series of processing blocks may recommence once the requesting user, application channel or the administrator sends restart trigger data comprising instruction and/or data sufficient to recommence execution of the series of processing blocks. Based upon the active state field, the processing block which was being executed when the interrupt occurred may be executed. Optionally, execution of the processing block which was interrupted may be executed from the point in execution where it was interrupted according to the active state field and, optionally, the authentication processing payload. Similarly, if the interrupt occurred between the execution of processing blocks, the execution of the next processing block may be commenced based on the active state field and, optionally, the authentication processing payload.

The state management system may be configured to execute steps to trigger the continued execution of the series of processing blocks upon registering the receipt of the data required for continued execution of the series of processing blocks or the request from the requesting user/application channel/administrator at apply domain 11Z. Alternatively, the state management system may be configured to execute steps to trigger the continued execution of the series of processing blocks based upon one or more events generated in response to receiving the data required for continued execution of the series of processing blocks or the request from the requesting user or the administrator at apply domain 11Z. In other embodiments, other stimuli may trigger the continued execution of a series of processing blocks. In some embodiments, the orchestration program is responsible for triggering execution of the series of processing blocks in response to the aforementioned stimuli after an interrupt. In these embodiments, the orchestration program may utilise the active state field of the execution progress indicator for the execution of the series of processing blocks in the state management system to determine the processing block to be executed in accordance with the series of processing blocks and the values relevant for input to this processing block.

In accordance with the previously discussed execution of a series of processing blocks, Figure 10 illustrates a flow chart defining how the state definition in the active state field may be changed by the state management system to indicate the present state of execution of the series of processing blocks.

At step 1010, payload data is received from execution of the series of processing blocks. As used herein, payload data refers to any data related to or output from the execution of the series of processing blocks. Generally, the payload data comprises output data from at least one processing block. However, particularly where the processing block outsources processing to user devices 60, external provider systems 40 and/or local servers 20, and/or otherwise only receives an acknowledgement of completion of the task or check, the payload data may comprise one or more parts of the authentication payload data corresponding to the execution of the series of processing blocks. Payload data may additionally or alternatively refer to events received in conjunction with execution of the series of processing blocks or generated by execution of the series of processing blocks. Payload data may be received at the state management system and/or the orchestration program which may be configured to control the state management system.

At step 1020, a first state definition is retrieved from the plurality of state definitions based upon the active state field of the execution progress indicator. Generally, the first state definition will not be stored in the execution progress indicator, with only a state definition identifier corresponding to the state definition being stored in the active state field as described herein. Therefore, in some embodiments it is necessary to retrieve the first state definition so that at least exit conditions can be used as required by step 1030 below. Moreover, even for embodiments where the first state definition and/or exit conditions for the first state definition are stored in the execution progress indicator, security can be improved by retrieving the first state definition from the plurality of state definitions. Specifically, by retrieving the first state definition from the plurality of state definitions, the plurality of state definitions would need to be centrally compromised to maliciously affect the state of execution of a series of processing blocks. Modification of the plurality of processing blocks can more easily be monitored and scrutinised than monitoring each individual execution progress indicator at any given time.

Retrieving the first state definition from the plurality of state definitions may comprise the state management system or orchestration program searching for and locating the first state definition in the plurality of state definitions. Generally, the first state definition can be located using the state definition identifier corresponding to the first state definition. Once located the first state definition may be read, parsed, copied and/or otherwise accessed, in part or in whole, so that at least the exit conditions for the first state definition can be processed in step 1030.

Step 1030 comprises determining that the exit condition of the first state definition is met according to the payload data. The determining is dependent upon the type of exit condition of the first state definition as identified herein above. Requiring an exit condition to be met in order to change state definition ensures that the processing, such as the execution of processing blocks, associated with the first state definition have been completed such that processing can continue, e.g. by executing a further processing block.

Next at step 1040, a second state definition is identified from the plurality of state definitions by determining which of the plurality of state definitions comprises entry conditions that are met. As for the exit conditions of the first state definition, the determining is dependent upon the type of entry conditions of the second state definition as identified herein above. In some embodiments, the step 1040 requires testing multiple entry conditions to determine which is the second state definition of the plurality of state definitions. The entry conditions may identify which state definition should precede them by identifying the state definition which should be identified in the active state field. Moreover, the entry conditions may require information from the configuration data for the series of processing blocks. In some embodiments, one of the state definitions has entry conditions that are met. Requiring an entry condition to be met in order to change state definition ensures that the processing, e.g. processing blocks, associated with the second state definition have sufficient data to be executed. This prevents processing errors and minimises processing inefficiencies caused by such errors.

In some embodiments, particularly where a large number of different processing blocks exist, and orders thereof are possible, it is practical to identify an allowable subset of state definitions in the plurality of state definitions which could be the next state definition identified in the active state field based upon the configuration file for the authentication pathway which is being followed. In particular, because state definitions correspond to and, generally, are each used to control the execution of one or more processing blocks, the configuration file (which identifies the series of processing blocks which should be executed to complete the authentication pathway) can be used to identify the allowable subset of state definitions which could be identified in the active state field to continue the series of processing blocks defining the authentication pathway. In some embodiments, the orchestration program or any other suitable program, may determine which state definitions could be identified in the active state field next in order to continue processing the current processing block in the series of processing blocks or to start processing the next processing block in the series of processing blocks according to the configuration file. In alternative embodiments, the configuration file may identify an allowable subset of state definitions to succeed each possible state definition. Generally, only one state definition in the allowable subset of state definitions will have its entry conditions met.

The identification of an allowable subset of states may allow entry conditions for each of the state definitions to be simplified such that adherence to the order of the series of processing blocks as defined in a configuration file is not dependent upon the entry conditions in each state definition. Moreover, identifying the allowable subset of states permits existing state definitions in the plurality of state definitions to be more easily used for executing newly defined series of processing blocks, thereby making the state definitions more modular and flexible while also reducing the frequency at which the plurality of state definitions is modified which improves system security.

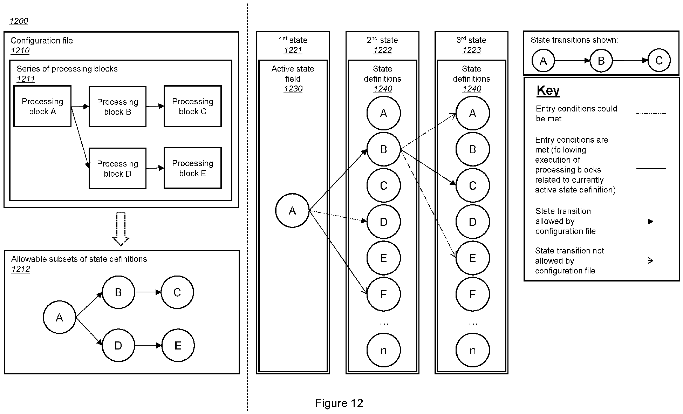

Briefly turning to Figure 12, pictorial representation 1200 is shown of one embodiment in which allowable subsets of the plurality of states are used. In this embodiment, configuration file 1210 defines a series of processing blocks 1211. Configuration file further provides or is used to identify allowable subsets of state definitions 1212. Allowable subsets of state definitions 1212 illustrate one simple example of possible series of state definitions according to the series of processing blocks 1211 where each processing block corresponds directly to only one state (represented by circles matching each processing block). Therefore, in accordance with the series of processing blocks, the first (initial) state 1221 is state A which will be identified in the active state field. Once processing block A is complete or the exit conditions for state A are otherwise met, a new state definition will need to be identified in the active state field as the second state 1222. The allowable subset of state definitions for the second state 1222 includes state B and state D. In this example, the entry condition of state B is met, while the entry condition of state D is not met, therefore state B in the plurality of state definitions 1240 is the next state that should be identified in the active state field such that processing block B is executed. For illustrative purposes, state F also has an entry condition that would be met at the point of transitioning from the first state 1221 to the second state 1222, however state F does not form part of the allowable subset of state definitions, thereby being excluded from consideration for being identified in the active state field as the second state 1222. Once processing block B has completed execution or the exit conditions for state B are otherwise met, a new state definition will need to be identified in the active state field as the third state 1223. The allowable subset of state definitions for the third state 1223 includes state C. The entry condition of state C is met, therefore state C in the plurality of state definitions 1240 is the next state that should be identified in the active state field such that processing block C is executed. For illustrative purposes, states A and E also have entry conditions that could be met (but which are not) when transitioning from the second state 1222 to the third state 1223, however states A and E do not form part of the allowable subset of state definitions, thereby being excluded from consideration for being identified in the active state field as the third state 1223. This example demonstrates how the plurality of state definitions 1240 can be narrowed using entry conditions and a configuration file 1210 such that the next state which should be entered can be identified. Generally, state definitions, the orchestration program (or other rules engine or program) and configuration files are designed such that one state definition in the plurality of state definitions has entry conditions which are met and is part of the allowable subset of state definitions in any scenario. In more complex systems, one state definition may correspond to part of the execution of a processing block, the execution of more than one processing block, or each processing block may have several state definitions which cause its execution (with the same or different parameters).

Returning to Figure 10, in some embodiments, it is practical to reduce the number of states in the plurality of states whose entry conditions should be tested in order to improve the speed at which the second state definition can be located. This can be done in conjunction with the use of the configuration file to reduce the number of allowable state definitions. In this embodiment, the allowable subset of state definitions may be the starting point for the states to search or the states to search may be narrowed and then limited to an allowable subset of state definitions based upon the configuration file. Therefore, state definitions may comprise data defining preceding states and/or data defining subsequent states which may be used to narrow the number of states searched in order to find the second state definition. For example, if the first state definition comprises data defining subsequent states, only the subset of states identified in the data defining subsequent states may have their entry conditions assessed from the plurality of state definitions. Additionally or alternatively, if each state definition in the plurality of state definitions comprises data defining preceding states, only the subset of the state definitions comprising data defining preceding states which identify the first state definition need to have their entry conditions assessed. If data defining preceding states and data defining subsequent states is available, the subsets of state definitions found by using both of these data types can be compared and only state definitions found in both subsets need to have their entry conditions assessed. Further additionally or alternatively, one or more state definition in the plurality of state definitions may comprise decisioning instructions for determining which state definition to use next. The decisioning instructions from the first state definition may be retrieved at step 1020, if they exist, and may be executed at step 1040 by the state management system and/or the orchestration program to determine the second state definition or otherwise narrow the number of state definitions of the plurality of state definitions whose entry conditions should be assessed.

At step 1050, the first state definition identified in the active state field is replaced with the second state definition. Replacing the first state definition with the second state definition typically involves overwriting the data relating to the first state definition in the active state field with data relating to the second state definition. Generally, the active state field will only identify one state definition by storing the state definition identifier for that state definition. In such embodiments, step 1050 comprises overwriting the state definition identifier for the first state definition with the state definition identifier for the second state definition.

At step 1060, further execution of the series of processing blocks is triggered in accordance with the second state definition. Triggering the further execution of the series of processing blocks may comprise ceasing execution of the currently executing processing block and/or triggering execution of a subsequent processing block of the plurality of predefined processing blocks in accordance with the series of processing blocks defined in the configuration data and the second state definition. The orchestration program may be triggered to initiate or cease execution of processing blocks, however, the processing blocks may also be directly triggered by the second state definition occupying the active state field, such as by an event generated by the second state definition being identified in the active state field. In other embodiments, the further execution of the series of processing blocks can comprise the continued execution of an already executing processing block. In yet other embodiments, the further execution of the series of processing blocks can comprise outputting an authentication outcome.

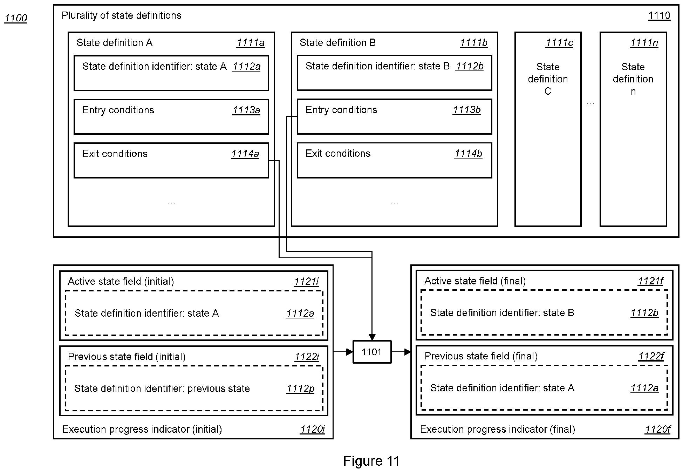

Figure 11 illustrates how an execution progress indicator is modified, from an initial case 1120i to a final case 1120f, when the state is changed in process 1101. Process 1101 may be method 1000 or any other state change method identified herein. In Figure 11, initially, the active state is state A as defined by state definition A 1111a, therefore the active state field 1121i initially stores a copy of the state definition identifier 1112a for state A. Similarly, the previous state field 1122i initially stores a copy of the state definition identifier for an arbitrary previous state 1112p which immediately preceded state A. The previous state field 1122 is optional. If state A is the first state, such that there is no immediately preceding state, the previous state field 1122i may initially comprise no data.

Each state definition, state definition A 1111a, state definition B 1111b, state definition C 1111c... state definition n 1111n, in the plurality of state definitions 1110 comprises at least a state definition identifier 1112, entry conditions 1113 and exit conditions 1114. In order for the state to be changed, process 1101 first determines that the exit conditions of the state definition identified in the active state field have been met. Therefore, process 1101 retrieves, receives or otherwise accesses the exit conditions 1114a for state definition A 1111a. If the exit conditions 1114a for the initially active state are met, entry conditions 1113 must be met for any new state which is to be entered. Optionally, the new state which is to be entered must also correspond to a state definition falling within the allowable subset of state definitions for the given state transition. In this example, state B is selected, in accordance with the above disclosure, to be the next active state. At least in part, this requires the entry conditions 1113b in state definition B 1111b to be met. Therefore, process 1101 retrieves, receives or otherwise accesses the exit conditions 1113b for state definition A 1111b. If the entry conditions 1113b for state B are also met, state B must be set to be the active state.

In order to set state B to be the active state, the state definition identifier 1112b for state B must be copied from state definition 1111b and stored in the active state field 1121 for the final case of the execution progress indicator 1120f to be reached. Generally, the copy of state definition identifier 1112b for state B will overwrite the copy of state definition identifier 1112a for state A such that only one state definition identifier (e.g. for state definition B) is stored in the final case of the active state field 1121f. If the execution progress indicator 1120 comprises a previous state field 1122, the state definition identifier 1112a for state A will overwrite the state definition identifier for the previous state 1112p in the final case of the previous state field 1122f. In some embodiments, the state definition identifier 1112a for state A is copied to the final case of previous state field 1122f from the initial case of the active state field 1121i before it is overwritten. In other embodiments, the state definition identifier 1112a for state A is copied to the final case of the previous state field 1122f from state definition A 1111a.

### General

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A computer-implemented method for state management of a series of processing blocks executing according to an authentication pathway, wherein an execution progress indicator stores data for the execution of the series of processing blocks, the execution progress indicator comprising an active state field, the active state field configured to identify one of a plurality of stored state definitions, each state definition defining an entry condition and an exit condition, the method comprising: receiving payload data from execution of the series of processing blocks; retrieving a first state definition from the plurality of state definitions based upon the active state field of the execution progress indicator; determining that the exit condition of the first state definition is met according to the payload data; identifying a second state definition from the plurality of state definitions by determining which of the plurality of state definitions comprises entry conditions that are met; replacing the first state definition identified in the active state field with the second state definition; and triggering further execution of the series of processing blocks in accordance with the second state definition.
2. The method of embodiment 1, wherein the active state field can only identify one state definition at any one time.
3. The method of embodiment 1 or embodiment 2, wherein each state definition comprises a unique state definition identifier and wherein the active state field stores one state definition identifier.
4. The method of any preceding embodiment, wherein the exit condition comprises one or more exit prerequisites and wherein at least one of the exit prerequisites must be met for the exit condition to be met.
5. The method of embodiment 4, wherein all of the exit prerequisites must be met for the exit condition to be met.
6. The method of embodiment 4 or 5, wherein determining that the exit condition of the first state definition is met according to the payload data further comprises: comparing one or more part of the payload data to one or more thresholds defined as one or more exit prerequisite in the exit condition.
7. The method of any of embodiments 4 to 6, wherein determining that the exit condition of the first state definition is met according to the payload data further comprises: determining whether one or more part of the payload data matches one or more exit baseline values identified in one or more exit prerequisite in the exit condition.
8. The method of any of embodiments 4 to 7, wherein determining that the exit condition of the first state definition is met according to the payload data further comprises: determining whether one or more part of the payload data falls within one or more range defined as one or more exit prerequisite in the exit condition.
9. The method of any preceding embodiment, wherein each entry condition comprises one or more entry prerequisites and wherein at least one of the entry prerequisites must be met for the respective entry condition to be met.
10. The method of embodiment 9, wherein all of the entry prerequisites must be met for the respective entry condition to be met.
11. The method of embodiment 9 or embodiment 10, wherein determining which of the plurality of state definitions comprises entry conditions that are met further comprises: comparing one or more part of the payload data to one or more thresholds defined as one or more entry prerequisite in each entry condition of the plurality of entry conditions comprised in the plurality of state definitions.
12. The method of any of embodiments 9 to 11, wherein determining which of the plurality of state definitions comprises entry conditions that are met further comprises: determining whether one or more part of the payload data matches one or more entry baseline values identified in one or more entry prerequisite one or more entry prerequisite in each entry condition of the plurality of entry conditions comprised in the plurality of state definitions.
13. The method of any of embodiments 9 to 12, wherein determining which of the plurality of state definitions comprises entry conditions that are met further comprises: determining whether one or more part of the payload data falls within one or more range defined as one or more entry prerequisite one or more entry prerequisite in each entry condition of the plurality of entry conditions comprised in the plurality of state definitions
14. The method of any preceding embodiment wherein each state definition comprises data defining preceding states.
15. The method of embodiment 14, determining which of the plurality of state definitions comprises entry conditions that are met further comprises: identifying a first subset of the plurality of state definitions that comprise data defining preceding states which corresponds to the first state definition; and determining which of the first subset of the plurality of state definitions comprises entry conditions that are met.
16. The method of any preceding embodiment wherein each state definition comprises data defining subsequent states.
17. The method of embodiment 16, determining which of the plurality of state definitions comprises entry conditions that are met further comprises: identifying a second subset of the plurality of state definitions which correspond to the data defining subsequent states comprised in the first state definition; and determining which of the second subset of the plurality of state definitions comprises entry conditions that are met.
18. The method of embodiment 17 when dependent upon embodiment 15, further comprising: checking that the second subset of the plurality of state definitions is identical to the first subset of the plurality of state definitions; and assessing the entry conditions of state definitions found in both second subset of the plurality of state definitions and the first subset of the plurality of state definitions.
19. The method of any preceding embodiment wherein each state definition comprises the decisioning instructions required to determine which state definition to use next.
20. The method of embodiment 19, further comprising: executing the decisioning instructions comprised in the first state definition.
21. The method of any preceding embodiment, wherein triggering further execution of the series of processing blocks in accordance with the second state definition comprises: ceasing execution of the currently executing processing block.
22. The method of embodiment 21, further comprising: triggering execution of a subsequent processing block of the plurality of predefined processing blocks in accordance with the series of processing blocks and the second state definition.
23. The method of embodiment 22, wherein the second state definition identifies the subsequent processing block of the predefined plurality of processing blocks.
24. The method of embodiment 21, further comprising: outputting an authentication outcome based on the second state definition.
25. The method of embodiment 24, wherein the authentication outcome is positive.
26. The method of embodiment 24, wherein the authentication outcome is negative.
27. The method of any preceding embodiment, wherein identifying the second state definition from the plurality of state definitions by determining which of the plurality of state definitions comprises entry conditions that are met comprises:
   identifying an allowable subset of state definitions from the plurality of state definitions based on a configuration file; and
   identifying the second state definition from the allowable subset of state definitions by determining which of the plurality of state definitions comprises entry conditions that are met.
28. The method of embodiment 27, wherein the allowable subset of state definitions is derived from the order of processing blocks identified in the configuration file.
29. The method of embodiment 27, wherein the allowable subset of state definitions is identified for each state transition in the configuration file.
30. The method of any preceding embodiment, further comprising: identifying the first state definition in a previous state field of the execution progress indicator, optionally wherein the previous state field only identifies one state definition.
31. The method of any preceding embodiment, further comprising: interrupting the execution of the series of processing blocks; and recommencing the execution of the series of processing blocks by triggering execution of the series of processing blocks in accordance with the state definition identified in the active state field.
32. The method of embodiment 31, wherein interrupting the execution of the series of processing blocks further comprises: receiving data indicative of an end-user requesting an interrupt to the execution of the series of processing blocks; and ceasing execution of the series of processing blocks in response to the data indicative of an end-user pausing the execution of the series of processing blocks.
33. The method of embodiment 31, wherein interrupting the execution of the series of processing blocks further comprises: determining that a predetermined time between end user inputs has been exceed; and ceasing execution of the series of processing blocks.
34. The method of embodiment 32 or embodiment 33, further comprising:
   receiving an input from an application channel or a requesting user; and
   determining to restart the execution of the series of processing blocks based on the input.
35. The method of embodiment 31, wherein interrupting the execution of the series of processing blocks further comprises: receiving data from the execution of the series of processing blocks to interrupt the execution of the series of processing blocks; and ceasing execution of the series of processing blocks in response to the data from the execution of the series of processing blocks.
36. The method of embodiment 35, further comprising: receiving an input from an external provider system or a local server; and determining to restart the execution of the series of processing blocks based on the input.
37. The method of any preceding embodiment, further comprising: storing the first state identifier in an audit log, wherein the audit log is configured to record each state identifier replaced in the active state field.
38. The method of embodiment 37, wherein the audit log is configured to record the execution of the series of processing blocks.
39. The method of embodiment 38, wherein the audit log further comprises one or more of:
   a process identifier, a requesting user identifier, the authentication outcome, a timestamp indicating when execution of a series of processing blocks commenced, a timestamp indicating when execution of a series of processing blocks finished and/or a timestamp indicating when the request for the resource was received.
40. A computer program product comprising instructions which, when executed by a cloud-based system, cause the cloud-based system to perform the steps of any preceding embodiment.
41. A (non-transitory) computer readable medium comprising instructions which, when executed by a cloud-based system, cause the cloud-based system to perform the method of any of embodiments 1 to 39.
42. A cloud-based system, the cloud-based system comprising at least one processor, wherein the at least one processor is configured to perform the method of any of embodiments 1 to 39.

## Claims

1. A computer-implemented method for state management of a series of processing blocks executing according to an authentication pathway, wherein an execution progress indicator stores data for the execution of the series of processing blocks, the execution progress indicator comprising an active state field, the active state field configured to identify one of a plurality of stored state definitions, each state definition defining an entry condition and an exit condition, the method comprising:
receiving payload data from execution of the series of processing blocks;
retrieving a first state definition from the plurality of state definitions based upon the active state field of the execution progress indicator;
determining that the exit condition of the first state definition is met according to the payload data;
identifying a second state definition from the plurality of state definitions by determining which of the plurality of state definitions comprises entry conditions that are met;
replacing the first state definition identified in the active state field with the second state definition; and
triggering further execution of the series of processing blocks in accordance with the second state definition.

2. The method of claim 1, wherein the active state field can only identify one state definition at any one time.

3. The method of claim 1 or claim 2, wherein each state definition comprises a unique state definition identifier and wherein the active state field stores one state definition identifier.

4. The method of any preceding claim wherein each state definition comprises one or more of: data defining preceding states, data defining subsequent states, and/or the decisioning instructions required to determine which state definition to use next.

5. The method of any preceding claim, wherein triggering further execution of the series of processing blocks in accordance with the second state definition comprises:
ceasing execution of the currently executing processing block.

6. The method of claim 5, further comprising:
triggering execution of a subsequent processing block of the plurality of predefined processing blocks in accordance with the series of processing blocks and the second state definition, optionally wherein the second state definition identifies the subsequent processing block of the predefined plurality of processing blocks.

7. The method of claim 5, further comprising,
outputting an authentication outcome based on the second state definition.

8. The method of claim 7, wherein the authentication outcome is positive or wherein the authentication outcome is negative.

9. The method of any preceding claim, wherein identifying the second state definition from the plurality of state definitions by determining which of the plurality of state definitions comprises entry conditions that are met comprises:
identifying an allowable subset of state definitions from the plurality of state definitions based on a configuration file; and
identifying the second state definition from the allowable subset of state definitions by determining which of the plurality of state definitions comprises entry conditions that are met.

10. The method of any preceding claim, further comprising:
identifying the first state definition in a previous state field of the execution progress indicator, optionally wherein the previous state field only identifies one state definition.

11. The method of any preceding claim, further comprising:
interrupting the execution of the series of processing blocks; and
restarting the execution of the series of processing blocks in accordance with the second state definition.

12. The method of any preceding claim, further comprising:
storing the first state identifier in an audit log, wherein the audit log is configured to record each state identifier replaced in the active state field.

13. A computer program product comprising instructions which, when executed by a cloud-based system, cause the cloud-based system to perform the steps of any preceding claim.

14. A (non-transitory) computer readable medium comprising instructions which, when executed by a cloud-based system, cause the cloud-based system to perform the method of any of claims 1 to 12.

15. A cloud-based system, the cloud-based system comprising at least one processor, wherein the at least one processor is configured to perform the method of any of claims 1 to 12.
